(19)

Europäisches Patentamt

European Patent Office

Office européen des brevets

(11) **EP 4 485 382 A1**

(12) **EUROPEAN PATENT APPLICATION**

(43) Date of publication:
**01.01.2025 Bulletin 2025/01**

(21) Application number: **24184983.5**

(22) Date of filing: **27.06.2024**

(51) International Patent Classification (IPC):
**G06V 10/82** (2022.01)   **G06V 20/62** (2022.01)

(52) Cooperative Patent Classification (CPC):
**G06V 20/625; G06V 10/82; G06V 20/63**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **30.06.2023 KR 20230085079**

(71) Applicant: **Thinkware Corporation Seongnam-si, Gyeonggi-do (KR)**

(72) Inventors:
- **JUNG, Haejun**
  **Seongnam-si, Gyeonggido (KR)**
- **SHIN, Dongwon**
  **Seongnam-si, Gyeonggido (KR)**
- **KO, Sukpil**
  **Seongnam-si, Gyeonggido (KR)**

(74) Representative: **BCKIP Part mbB**
**Siegfriedstraße 8**
**80803 München (DE)**

(54) **ELECTRONIC DEVICE, METHOD, AND NON-TRANSITORY COMPUTER READABLE STORAGE MEDIUM FOR OBTAINING LABELING INFORMATION FOR TRAINING OF NEURAL NETWORK**

(57)    In an electronic device according to an embodiment, the electronic device, is configured to include memory, and a processor. The processor is configured to obtain a first image including a virtual license plate including text objects, using a template indicating a type of license plates. The processor is configured to, based on identifying a real license plate attached to a vehicle from a second image corresponding to the vehicle, obtain position information of the real license plate and color information regarding at least a portion of the real license plate. The processor is configured to, using the color information, change at least one color of pixels included in the first image.

**Description**

**BACKGROUND**

TECHNICAL FIELD

One or more embodiments of the instant disclosure generally relate to an electronic device, a method, and a non-transitory computer readable storage medium for obtaining labeling information for training a neural network.

DESCRIPTION OF RELATED ART

As image object recognition technology develops, various types of services are emerging. The service may be used for Automatic Driving, Augmented Reality, Virtual Reality, Metaverse, and the like, and may be provided through an electronic device owned by different users, such as a smartphone. The service may be related to hardware and/or software mechanisms that mimic human behavior and/or thinking, such as artificial intelligence. The technology related to the artificial intelligence may include a technology using a neural network that simulates a neural network of an organism.

**SUMMARY**

A method for identifying a license plate attached to a vehicle using a neural network may be required.

A technical problem intended to be achieved in the present document is not limited to an above-described technical problem, and other technical problems not mentioned herein will be clearly understood by a person with ordinary knowledge in a technical field to which the present invention belongs from the following description.

In an electronic device according to an embodiment, the electronic device, may be configured to comprise memory, and a processor. The processor may be configured to obtain a first image including a virtual license plate including text objects, using a template indicating a type of license plates. The processor may be configured to, based on identifying a real license plate attached to a vehicle from a second image corresponding to the vehicle, obtain position information of the real license plate and color information regarding at least a portion of the real license plate. The processor may be configured to, using the color information, change at least one color of pixels included in the first image. The processor may be configured to obtain a third image including the vehicle to which the virtual license plate is attached by merging the second image with the first image including at least one pixel of which the at least one color is changed, based on the position information. The processor may be configured to store a pair of the third image, the text objects, and position information indicating a position within the third image to which the first image is attached, as label information for training a neural network.

In a method performed by an electronic device according to an embodiment, the method may comprise obtaining a first image including a virtual license plate including text objects, using a template indicating a type of license plates. The method may comprise, based on identifying a real license plate attached to a vehicle from a second image corresponding to the vehicle, obtaining position information of the real license plate and color information regarding at least a portion of the real license plate. The method may comprise, using the color information, changing at least one color of pixels included in the first image. The method may comprise obtaining a third image including the vehicle to which the virtual license plate is attached by merging the second image with the first image including at least one pixel of which the at least one color is changed, based on the position information. The method may comprise storing a pair of the third image, the text objects, and position information indicating a position within the third image to which the first image is attached, as label information for training a neural network.

In a computer readable storage medium storing one or more programs according to an embodiment, the one or more programs may be configured to comprise instructions that, when executed by a processor of an electronic device, cause the electronic device to obtain a first image including a virtual license plate including text objects, using a template indicating a type of license plates. The one or more programs may be configured to comprise instructions that, when executed by the processor of the electronic device, cause the electronic device to, based on identifying a real license plate attached to a vehicle from a second image corresponding to the vehicle, obtain position information of the real license plate and color information regarding at least a portion of the real license plate. The one or more programs may be configured to comprise instructions that, when executed by the processor of the electronic device, cause the electronic device to, using the color information, change at least one color of pixels included in the first image. The one or more programs may be configured to comprise instructions that, when executed by the processor of the electronic device, cause the electronic device to obtain a third image including the vehicle to which the virtual license plate is attached by merging the second image with the first image including at least one pixel of which the at least one color is changed, based on the position information. The one or more programs may be configured to comprise instructions that, when executed by the processor of the electronic device, cause the electronic device to store a pair of the third image, the text objects, and position information indicating a position within the third image to which the first image is attached, as label information for training a neural network.

An electronic device, method, and non-transitory computer-readable storage medium according to an embodiment of the instant disclosure can obtain label information for identifying a license plate attached to a vehicle using a neural network.

The effects that can be obtained from the present disclosure are not limited to those described above, and any other effects not mentioned herein will be clearly understood to those having ordinary knowledge in the art to which the disclosure belongs, from the following description.

## BRIEF DESCRIPTION OF THE DRAWINGS

The above and other aspects, features, and advantages of certain embodiments of the disclosure will be more apparent from the following description, taken in conjunction with the accompanying, in which:

FIG. 1 illustrates an example of a block diagram of an electronic device according to an embodiment.

FIG. 2 illustrates an example of a template of a virtual license plate to be obtained by an electronic device according to an embodiment.

FIG. 3 illustrates an example of data on a virtual license plate obtained by an electronic device according to an embodiment.

FIG. 4 illustrates an example of a virtual license plate obtained by an electronic device according to an embodiment.

FIG. 5 illustrates an example of a neural network used by an electronic device to obtain a virtual license plate according to an embodiment.

FIG. 6 illustrates an example of a virtual license plate obtained by an electronic device using a neural network according to an embodiment.

FIG. 7 illustrates an example of a table indicating a license plate for being identified by an electronic device according to an embodiment.

FIGS. 8A to 8B illustrate an example of a table indicating a type of a license plate for being identified by an electronic device according to an embodiment.

FIG. 9 illustrates an example of an image to be used by an electronic device to obtain position information according to an embodiment.

FIG. 10 illustrates an example of an operation in which an electronic device obtains position information of a real license plate attached to a vehicle according to an embodiment.

FIG. 11 illustrates an example of an operation in which an electronic device uses color information of a real license plate in order to change a color of a virtual license plate according to an embodiment.

FIG. 12 illustrates an example of an operation in which an electronic device changes a color of a virtual license plate using a histogram indicating a color for a real license plate according to an embodiment.

FIG. 13 illustrates an example of a virtual license plate based on noise obtained by an electronic device according to an embodiment.

FIG. 14 illustrates an example of an operation by an electronic device for projecting a first image onto a second image, according to an embodiment.

FIG. 15 illustrates an example of an operation in which an electronic device stores a third image obtained by merging a first image including a virtual license plate with a second image as label information, according to an embodiment.

FIG. 16 illustrates an example of a flowchart indicating an operation of an electronic device according to an embodiment.

FIG. 17 is a diagram for describing an operation of an electronic device training a neural network based on a set of training data.

FIG. 18 is a block diagram of an electronic device, according to an embodiment.

FIG. 19 illustrates an example of position information corresponding to a polygonal shape according to an embodiment.

## DETAILED DESCRIPTION

Hereinafter, various embodiments of the present document will be described with reference to the accompanying drawings.

The various embodiments of the present document and terms used herein are not intended to limit the technology described in the present document to specific embodiments, and should be understood to include various modifications, equivalents, or substitutes of the corresponding embodiment. In relation to the description of the drawings, a reference numeral may be used for a similar component. A singular expression may include a plural expression unless it is clearly meant differently in the context. In the present document, an expression such as "A or B", "at least one of A and/or B", "A, B or C", or "at least one of A, B and/or C", and the like may include all possible combinations of items listed together. Expressions such as "1st", "2nd", "first" or "second", and the like may modify the corresponding components regardless of order or importance, is only used to distinguish one component from another component, but does not limit the corresponding components. When a (e.g., first) component is referred to as "connected (functionally or communicatively)" or "accessed" to another (e.g., second) component, the component may be directly connected to the other component or may be connected through another component (e.g., a third component).

The term "module" used in the present document may include a unit configured with hardware, software, or firmware, and may be used interchangeably with terms such as logic, logic block, component, or circuit, and the like, for example. The module may be an integrally configured component or a minimum unit or part thereof that performs one or more functions. For example, a module may be configured with an application-specific integrated circuit (ASIC).

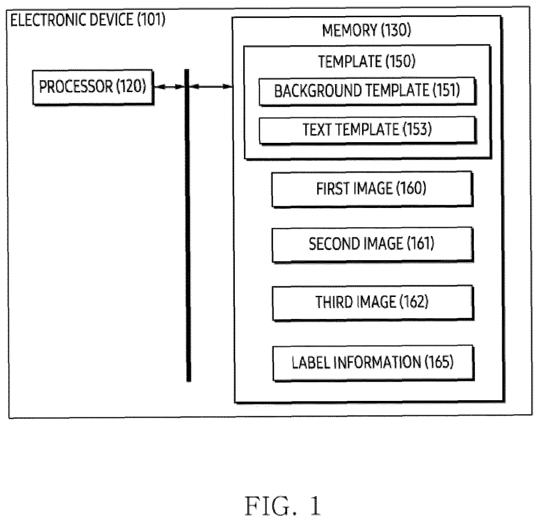

FIG. 1 illustrates an example of a block diagram of an electronic device according to an embodiment. Referring to FIG. 1, an electronic device 101 according to an embodiment may include at least one of a processor 120 and a memory 130. The processor 120 and the memory 130 may be electronically and/or operably coupled with each other by an electronical component such as a communication bus. Hereinafter, that the hardware is operably coupled may mean that a direct connection or an indirect connection between hardware is established by wire or wirelessly so that the second hardware is controlled by the first hardware among the hardware. Although the components of electronic device 101 are illustrated in different blocks, the embodiment is not limited thereto. Some of the hardware of FIG. 1 may be included in a single integrated circuit, such as a system on a chip (SoC). The type and/or number of hardware included in the electronic device 101 is not limited to that illustrated in FIG. 1. For example, the electronic device 101 may include only some of the hardware illustrated in FIG. 1.

According to an embodiment, the electronic device 101 may include hardware for processing data based on one or more instructions. The hardware for processing data may include the processor 120. For example, the hardware for processing data may include an arithmetic and logic unit (ALU), a floating point unit (FPU), a field programmable gate array (FPGA), a central processing unit (CPU), and/or an application processor (AP). The processor 120 may have a structure of a single-core processor, or may have a structure of a multi-core processor such as a dual core, a quad core, a hexa core, or an octa core.

The memory 130 of the electronic device 101 according to an embodiment may include a hardware component for storing data and/or an instruction inputted to and/or outputted to the processor 120 of the electronic device 101. For example, the memory 130 may include volatile memory such as random-access memory (RAM) and/or non-volatile memory such as read-only memory (ROM). For example, the volatile memory may include at least one of dynamic RAM (DRAM), static RAM (SRAM), Cache RAM, and pseudo SRAM (PSRAM). For example, the non-volatile memory may include at least one of programmable ROM (PROM), erasable PROM (EPROM), electrically erasable PROM (EEPROM), flash memory, hard disk, compact disk, solid state drive (SSD) and embedded multi-media card (eMMC).

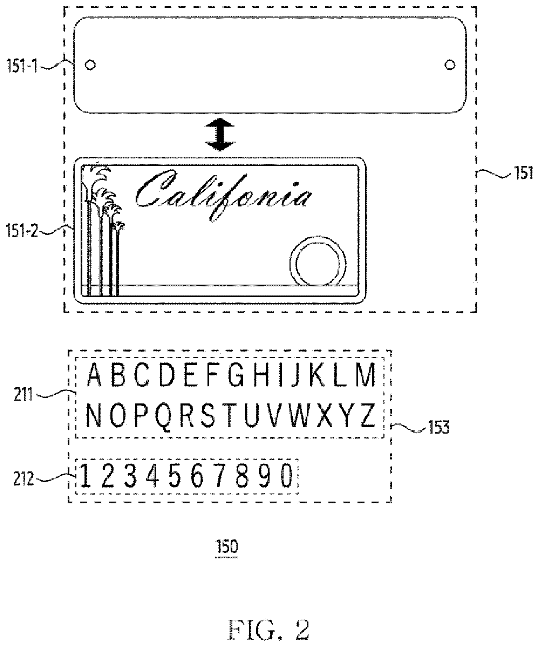

For example, the memory 130 of the electronic device 101 may include a neural network (not illustrated). The electronic device 101 may identify a license plate attached to a vehicle based on the neural network stored in the memory 130. For example, the electronic device 101 may train the neural network based on an image (or label information 165) stored in the memory 130. The electronic device 101 may train the neural network based on a virtual license plate included in the image. An operation for generating the virtual license plate for the electronic device 101 to learn the neural network will be described later with reference to FIGS. 2 to 6.

The memory 130 of the electronic device 101 according to an embodiment may include a template 150. The template 150 may include information on a type of a license plate attached to the vehicle. For the template 150, a country-specific license plate rule (e.g., "Notice on standards for a vehicle registration plate, and the like") may be taken into consideration. For example, a type of the template 150 may be different according to the country-specific license plate rule. The electronic device 101 may identify the template 150 that differs from the country-specific license plate rule. For example, the template 150 may include a background template 151 indicating a background of the license plate and/or a text template 153 indicating a text object (e.g., a number or character) for the license plate. An exemplary description of the template 150 will be described later with reference to FIG. 2.

For example, the memory 130 of the electronic device 101 may include a first image 160. The first image 160 may include a virtual license plate obtained by the electronic device 101 using the template 150. A size of the first image 160 may correspond to a size of the virtual license plate. An operation in which the electronic device 101 obtains the first image 160 will be described later with reference to FIGS. 2 to 4.

For example, the memory 130 of the electronic device 101 may include a second image 161. The second image 161 may be an example of an image corresponding to a real environment including the vehicle. The second image 161 may include a real license plate attached to the vehicle. The electronic device 101 may obtain position information and color information of the real license plate using the second image 161. The electronic device 101 may change a color of the first image 160 using the color information, and may merge the first image 160 with at least a portion of the second image 161 using the position information.

For example, the memory 130 of the electronic device 101 may include a third image 162. The third image 162 may include a vehicle in which the virtual license plate are attached by merging the second image 161 and the first image 160. For example, the electronic device 101 may store the third image 162, the text objects, and position information indicating a position in the third image to which the first image 160 is merged in the memory 130, as the label information 165. The position information may indicate a position (e.g., a coordinate value) at which the first image 160 is overlapped in the third image. The label information 165 may be used for training of the neural network for identifying the license plate attached to the vehicle in the image.

As described above, the electronic device 101 according to an embodiment may obtain a virtual license plate for learning of the neural network for identifying the license plate. The electronic device 101 may not infringe on user information corresponding to the real license plate, unlike using the real license plate of the vehicle included in the image corresponding to the real environment based on using the virtual license plate for learning the neural network.

Hereinafter, an exemplary description of the template 150 to be used to obtain the virtual license plate will be described later with reference to FIG. 2.

FIG. 2 illustrates an example of a template of a virtual license plate to be obtained by an electronic device according to an embodiment. An electronic device 101 of FIG. 2 may include the electronic device 101 of FIG. 1. At least one of operations of FIG. 2 may be performed by a processor 120 of FIG. 1.

Referring to FIG. 2, an example of a template 150 based on a country-specific license plate rule is illustrated. The template 150 may be different according to region, nation, and/or time. The template 150 may include a background template 151 indicating a background of the license plate and/or a text template 153 indicating text objects to be included in the license plate.

For example, the background template 151 may have a designated size. The designated size may differ according to the nation or the region. The designated size may differ according to a use of a vehicle and/or a type of the vehicle. The background template 151 may include a visual object, figure, and/or color indicating the region or the nation. A color of the background template 151 may vary according to the type of the vehicle and/or the use of the vehicle. For example, in case of generating a virtual license plate corresponding to a first nation (e.g., Korea), the electronic device 101 may generate the virtual license plate using a first background template 151-1. For example, in case of generating a license plate corresponding to a second nation (e.g., the United States), the electronic device 101 may generate the virtual license plate using a second background template 151-2. The electronic device 101 may select the background template 151 based on a nation or a region corresponding to the virtual license plate to be generated.

For example, the text template 153 may include text objects to be included in the license plate. The text template 153 may include text objects 211 indicating a character and/or text objects 212 indicating a number. The text objects included in the text template 153 may have a designated size in order to be included in the background template 151. The designated size may be set based on the country-specific license plate rule. However, it is not limited thereto. The text objects included in the text template 153 may include characters based on language (e.g., Chinese characters, Hangul, alphabet, and/or Hiragana). The text objects may be identified based on a designated font. The language and/or the designated font of the text objects may differ according to the region, the nation, and/or the time. For example, the text objects may include text objects based on a first font (e.g., penitentiary gothic) in case of the United States, and may include text objects based on a second font (e.g., rage italic) in case of the state of California in the United States. However, it is not limited thereto. In case that the country-specific license plate rule is changed, the background template 151 and/or the text template 153 may be changed.

The electronic device 101 according to an embodiment may obtain a virtual license plate by selecting at least one of the background templates 151 and merging at least one of text objects included in the text template 153 within the selected at least one background template.

For example, the electronic device 101 may obtain the virtual license plate by mixing the text objects 211 indicating the character and/or the text objects 212 indicating the number. The number of the text objects (e.g., the text objects 211 indicating the character, and/or the text objects 212 indicating the number) included in the virtual license plate may differ according to the region, the nation, and/or the time. For example, the electronic device 101 may select at least one of the text objects 211 indicating the character based on the number of occurrences, and may randomly select at least one of the text objects 212 indicating the number. However, it is not limited thereto. For example, the electronic device 101 may obtain the virtual license plate by mixing the text objects in the text template in the background template based on a designated setting value (e.g., size, position, and/or number) according to the country-specific license plate rule.

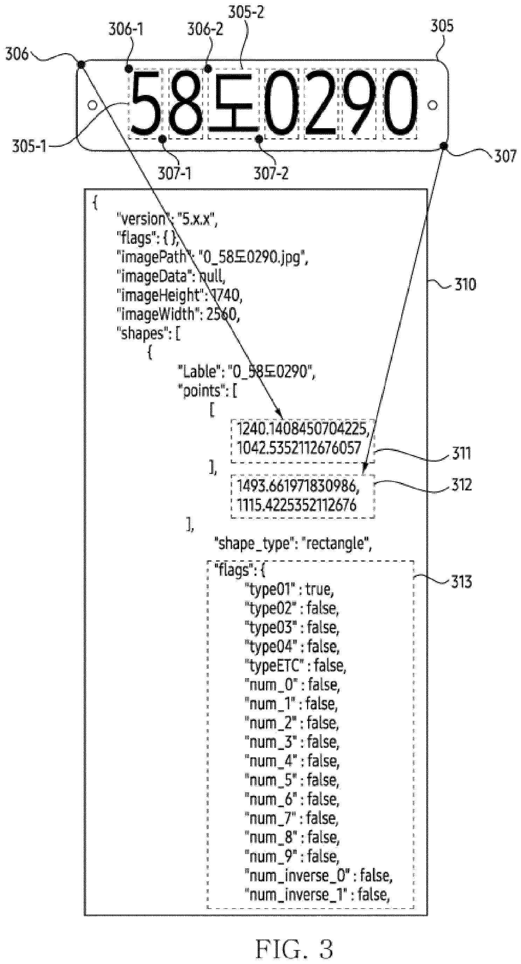

With reference to FIG. 3, a description of exemplary data used by the electronic device 101 to obtain the virtual license plate according to an embodiment will be described later.

FIG. 3 illustrates an example of data on a virtual license plate obtained by an electronic device according to an embodiment. An electronic device 101 of FIG. 3 may include the electronic device 101 of FIGS. 1 to 2. At least one of operations of FIG. 3 may be performed by a processor 120 of FIG. 1.

Referring to FIG. 3, the electronic device 101 according to an embodiment may obtain a virtual license plate 305 using a template 150 of FIG. 1. The virtual license plate 305 may be obtained based on a country-specific license plate rule. For example, the electronic device 101 may set a size, a color, and/or whether to include a visual object of a background template (e.g., a background template 151 of FIG. 1). The electronic device 101 may obtain the virtual license plate 305 by merging the set background template and text objects included in a text template (e.g., a text template 153 of FIG. 1). The electronic device 101 may set a position, a size, and/or a type (e.g., a character or a number) of text objects to be included in the background template in order to obtain the virtual license plate 305. The electronic device 101 may set a type of the virtual license plate 305 according to a type of a license plate to be identified using a neural network to be trained. The type of the license plate may be set based on the position (e.g., a region, or a nation) of a real environment corresponding to an image including the license plate.

For example, the electronic device 101 may identify data 310 for obtaining the virtual license plate 305. The data 310 may include information on the virtual license plate 305. For example, the information on the virtual license plate 305 may include information on a type of the template, a color of the background template, a shape of the background template (e.g., rectangle), a position corresponding to the template (e.g., the region or the nation), a size of the virtual license plate 305, and/or text objects (e.g., "58 ㄴ 0290") to be included in the virtual license plate 305. The data 310 may be included in label information in which the electronic device 101 will train a neural network for identifying the license plate. For example, the electronic device 101 may train a neural network using an image including a real license plate and data (e.g., the data 310) including information on the real license plate.

For example, the data 310 may include information indicating the size of the virtual license plate 305. Line information 311 may indicate center coordinate (e.g., Min X and Min Y) of a two-dimensional coordinate axis. The center coordinate of the two-dimensional coordinate axis may mean a coordinate serving as criteria for identifying one position of the virtual license plate 305. For example, the line information 311 may include information indicating the one position (e.g., "points" of FIG. 3) of the virtual license plate 305 based on the shape (e.g., "shapes" of FIG. 3) of the virtual license plate 305. For example, the line information 311 may indicate a coordinate (e.g., 1240. 1408450704225, 1042.535211676057) of position information 306 with respect to an edge of the Left-Top of the virtual license plate 305 based on the two-dimensional coordinate axis. The line information 312 may indicate a relative coordinate (e.g., Max X and Max Y) with respect to the center coordinate. For example, the line information 312 may indicate a coordinate (e.g., 1493. 661971830986, 1115. 4225352112676) of position information 307 with respect to an edge of the Right-Bottom of the virtual license plate 305 based on the two-dimensional coordinate axis. However, it is not limited thereto. The electronic device 101 may set a size of the virtual license plate using coordinate values of the position information 306 and the position information 307. The size of the virtual license plate may be changed according to the type of the virtual license plate 305.

For example, the data 310 may include information on a vehicle to which the virtual license plate 305 is to be attached. For example, line information 313 indicating the information on the vehicle may include the type of the vehicle, the use of the vehicle, and/or a registration location of the vehicle. The line information 313 may be obtained based on a JSON format. The electronic device 101 may identify at least one of pieces of information on the vehicle included in the line information 313 according to the type of the virtual license plate 305 to be obtained. For example, in case of the first type (e.g., "type01"), the shape of the license plate may have a rectangular shape with a horizontal length longer than a vertical length. For example, a color of a text object included in the license plate may be the first color (e.g., black). In case of the second type (e.g., "type02"), the shape of the license plate may have a rectangular shape with a horizontal length shorter than the horizontal length of the first type of rectangle and a vertical length longer than the vertical length of the first type of rectangle. For example, the color of the text object included in the license plate may be the first color (e.g., black). In case of the third type (e.g., "type03"), the shape of the license plate may be similar to the first type of license plate. In case of the third type, the color of the license plate may be different from the color of the first type of license plate. Since uses of a vehicle having the license plate corresponding to the first type and a vehicle having the license plate corresponding to the third type may be different, the colors of the first type of license plate and the third type of license plate may be different. The color of the text object included in the third type of license plate may be the second color (e.g., white). In case of the fourth type ("type04"), the shape of the license plate may be similar to the shape of the second type of license plate. The color of the text object included in the fourth type of license plate may be the second color. However, it is not limited thereto. The type of the license plate may vary according to the region, the nation, and/or the use of the vehicle. The electronic device 101 may obtain information corresponding to the type from the identified license plate by identifying the type of license plate. For example, in case that information on the first type (e.g., "type01") is selected (e.g., true) and information on another type (e.g., "type02" to "type ETC") is not selected (e.g., false), the electronic device 101 may obtain the virtual license plate 305 corresponding to the first type. A description of the JSON format will be described later with reference to Table 1 below.

【Table 1】

【Table 1】

```
"flags": {},

  "shapes": [

    {

      "label": "58토0290",

      "points": [

        [

          1513.0806104480532,

          923.0885427839318

        ],

        [

          1653.8700841322636,

          959.9306480470897

        ]

      ],

      "group_id": null,

      "shape_type": "rectangle",

      "flags": {

        "passenger_car": false,

        "truck": false,

        "type01": true,

        "type02": false,
```

```
"type03": false,

"type04": false,

"typeETC": false,

"DO_NOT_SELECT_THIS_-_NUMBERS": false,

"num_0": false,

"num_1": false,

"num_2": false,

"num_3": false,

"num_4": false,

"num_5": false,

"num_6": false,

"num_7": false,

"num_8": false,

"num_9": false,

"DO_NOT_SELECT_THIS_-_INVERSE_NUMBERS": false,

"num_inverse_0": false,

"num_inverse_1": false,

"num_inverse_2": false,

"num_inverse_3": false,

"num_inverse_4": false,

"num_inverse_5": false,
```

```
"num_inverse_6": false,

"num_inverse_7": false,

"num_inverse_8": false,

"num_inverse_9": false,
```

The Table 1 according to an embodiment may include a portion of information indicating a virtual license plate obtained by the electronic device 101 through the image. For example, the electronic device 101 may train the neural network using the portion of the information and a virtual license plate (or license plate image) corresponding to the information.

For example, referring to Table 1, "flags" may mean that the information below includes data indicating at least one license plate included in the image (e.g., class information). Information corresponding to "flags" may be different for each portion (or category) classified as "flags". "flags" may be used to classify information corresponding to "flags".

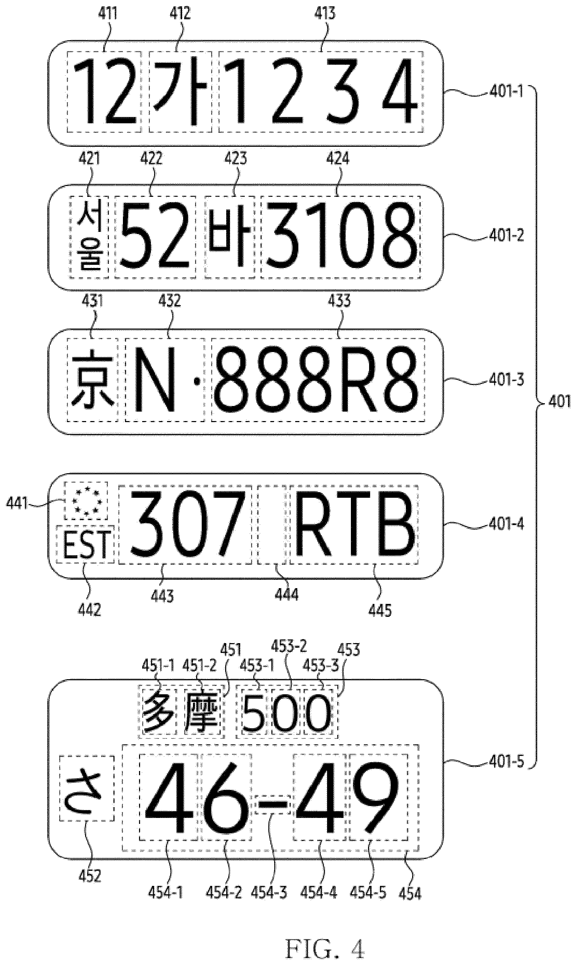

For example, "label" may indicate a text object and/or a visual object for electronic device 101 to identify through the neural network. For example, "label" may mean data indicating a correct answer. "label" may be referred to as guide information for the electronic device 101 to train the neural network. For example, in case that a plurality of license plates are identified in the image, data sets (e.g., label-to-flags) (or instructions) corresponding to each of the plurality of license plates may be obtained. For example, data sets below "label" may be used to identify a text object corresponding to the "label". For example, the data sets may be obtained based on position information (e.g., a first position 411 of FIG. 4 to be described later) included in the license plate. The position information may vary according to the shape of the license plate. A description of the shape of the license plate will be described later with reference to FIG. 4. Since the position including the text object and/or the visual object may be different according to the shape of the license plate, the electronic device 101 may infer position information including the text object by identifying the shape (or type) of the license plate. For example, the number of text objects to be set by the electronic device 101 may be different based on the type of the virtual license plate to be generated. Data sets based on the JSON format may be obtained based on the number of the text objects.

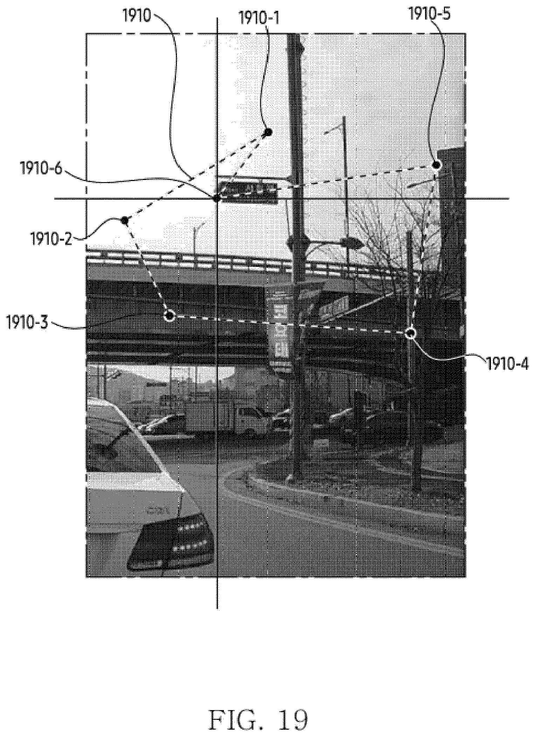

For example, "point" may indicate a position (e.g., 1513.0806104480532, 923088542783918) of an upper left edge of the rectangle and/or a position (e.g., 1653.8700841322636, 959.930480470897) of a lower right edge of the rectangle, based on the shape of the virtual license plate 305 (or a bounding box for identifying one position of the virtual license plate). For example, the "point" may be changed according to the shape of the virtual license plate 305 (or the bounding box). For example, in case of a shape based on a n-polygon (or a polygon), "point" may include n pieces of position information. For example, position information on the shape based on the n-polygon (or the polygon) may be indicated as illustrated in FIG. 19. Referring to FIG. 19, the electronic device 101 may identify position information corresponding to edges 1910-1, 1910-2, 1910-3, 1910-4, 1910-5, and 1910-6 of a polygon 1910. However, it is not limited thereto.

For example, the line information 311 and/or the line information 312 may be an example of a "point". For example, "shape type" may indicate the shape of the license plate corresponding to the type of the license plate. For example, referring to the Table 1, since the first type (e.g., "type01") among information indicating the type of the license plate is true and the rest is false, the information included in the Table 1 may include a shape (e.g., the rectangle) corresponding to the first type, and position information (e.g., the line information 311 and/or the line information 312) based on the first type. For example, referring to Table 1, "truck" and/or "passenger car" may be set based on the type of the vehicle.

For example, "NUMBERS" may be set to true in case that the color of the text object included in the virtual license plate is the first color (e.g., black), and may be set to false in case of the second color (e.g., a color different from black). "num_n" may be used to identify a text object (e.g., number) included in one position (e.g., position information to be described later in FIG. 4) of the virtual license plate. For example, in case that a text object (e.g., number) included in the one position of the virtual license plate is 5, "num_5" may be set to true. "INVERSE_NUMBERS" may be set to true in case that the color of the text object included in the virtual license plate is the second color (e.g., white), and may be set to false in case of a color different from the second color (e.g., a color different from white). "num_inverse_n" may be used to identify the text object (e.g., number) included in the one position (e.g., the position information to be described later in FIG. 4) of the virtual license plate. For example, in case that the text object (e.g., number) included in the one position of the virtual license plate is 5, "num_inverse_5" may be set to true. However, it is not limited thereto. Hereinafter, information for identifying the text object (e.g., number, symbol, or character) in the license plate will be described later with reference to Tables 2 to 5.

【Table2】

"DO_NOT_SELECT_THIS_-_CHARACTERS": false,

```
"char_가": false,

"char_나": false,

"char_나": false,

"char_과": false,

"char_마": false,

"char_하": false,

"char_거": false,

"char_너": false,

"char_더": false,

"char_러": false,

"char_머": false,

"char_벼": false,

"char_서": false,

"char_어": false,

"char_저": false,

"char_고": false,

"char_노": false,

"char_도": false,

"char_로": false,

"char_모": false,

"char_보": false,
```

```
"char_소": false,

"char_오": false,

"char_조": false,

"char_구": false,

"char_누": false,

"char_두": false,

"char_루": false,

"char_무": false,

"char_부": false,

"char_수": false,

"char_우": false,

"char_주": false,

"char_바": false,

"char_사": false,

"char_아": false,

"char_자": false,

"char_배": false,
```

The Table 2 may include information on the text object (e.g., character) included in the license plate according to an embodiment. Referring to Table 2, the electronic device 101 according to an embodiment may identify a text object included in the one position of the license plate. For example, "CHARACTERS" may be set to true in case that the color of the text object included in the license plate is the first color (e.g., black), and may be set to false in case of the second color (e.g., the color different from black). "char_가" to "char_배" may indicate a variable indicating information on the character included in the one position of the license plate.

For example, the variable may vary according to the type of license plate, the region (or nation) in which the license plate is used, and the language of characters included in the license plate. For example, the variable may include each word of Hangul, English, Chinese characters, and/or Hiragana. For example, the variable may include one or more letters. For example, in case that the electronic device 101 identifies a text object corresponding to at least one of the variables, the electronic device 101 may set the variable corresponding to the text object to true. An operation in which the electronic device 101 obtains a data set in which the variable corresponding to the text object is set to true will be described later with reference to Tables 4 to 5.

【Table 3】

```
"DO_NOT_SELECT_THIS_-_INVERSE_CHARACTERS": false,

        "char_inverse_가": false,

        "char_inverse_나": false,

        "char_inverse_다": false,

        "char_inverse_라": false,

        "char_inverse_마": false,

        "char_inverse_거": false,

        "char_inverse_너": false,

        "char_inverse_더": false,

        "char_inverse_러": false,

        "char_inverse_머": false,

        "char_inverse_버": false,

        "char_inverse_서": false,
```

```
                    "char_inverse_어": false,

                    "char_inverse_저": false,

                    "char_inverse_고": false,

                    "char_inverse_노": false,

                    "char_inverse_도": false,

                    "char_inverse_로": false,

                    "char_inverse_보": false,

                    "char_inverse_보": false,

                    "char_inverse_소": false,

                    "char_inverse_오": false,

                    "char_inverse_조": false,

                    "char_inverse_구": false,

                    "char_inverse_누": false,

                    "char_inverse_두": false,

                    "char_inverse_루": false,

                    "char_inverse_무": false,

                    "char_inverse_부": false,

                    "char_inverse_수": false,

                    "char_inverse_우": false,

                    "char_inverse_주": false,

                    "char_inverse_바": false,
```

```
                "char_inverse_사": false,

                "char_inverse_아": false,

                "char_inverse_자": false,

                "char_inverse_배": false,

                "DO_NOT_SELECT_THIS_-_ETC_NOW_ON": false

            }

        },
```

Table 3 may include the information on the text object (e.g., character) included in the license plate according to an embodiment. For example, "INVERSE_CHARACTERS" may be set to true in case that the color of the text object included in the license plate is the first color (e.g., white), and may be set to false in case of the second color (e.g., the color different from white). "char_inverse_가" to "char_inverse_배" may indicate a variable (e.g., '가' or '배') indicating information on the character included in the one position of the license plate. For example, the variable may vary according to the type of license plate, the region (or nation) in which the license plate is used, and the language of characters included in the license plate. For example, the variable may include each word of Hangul, English, Chinese characters, and/or Hiragana. For example, the variable may include one or more letters. For example, in case that the electronic device 101 identifies a text object corresponding to at least one of the variables, the electronic device 101 may set the variable corresponding to the text object to true. However, it is not limited thereto. For example, in case that the electronic device 101 obtains a data set based on the JSON format for a position 305-1, the data set may be indicated as shown in Table 4.

【Table 4】

```
{

    "label": "58도0290",

    "points": [

        [
```

```
            1526.8438538205978,

            929.5681063122923

        ],

        [

            1540.1328903654485,

            953.156146179402

        ]

    ],

    "group_id": null,

    "shape_type": "rectangle",

    "flags": {

        "car": false,

        "truck": false,

        "type01": false,

        "type02": false,

        "type03": false,

        "type04": false,

        "typeETC": false,

        "DO_NOT_SELECT_THIS_-_NUMBERS": false,

        "num_0": false,

        "num_1": false,
```

```
        "num_2": false,

        "num_3": false,

        "num_4": false,

        "num_5": true,

        "num_6": false,

        "num_7": false,

        "num_8": false,

        "num_9": false,

        "DO_NOT_SELECT_THIS_-_INVERSE_NUMBERS": false,

        "num_inverse_0": false,

        "num_inverse_1": false,

        "num_inverse_2": false,

        "num_inverse_3": false,

        "num_inverse_4": false,

        "num_inverse_5": false,

        "num_inverse_6": false,

        "num_inverse_7": false,

        "num_inverse_8": false,

        "num_inverse_9": false,

"DO_NOT_SELECT_THIS_-_CHARACTERS": false,

        "char_가": false,
```

```
"char_나": false,

"char_다": false,

"char_라": false,

"char_마": false,

"char_하": false,

"char_거": false,

"char_너": false,

"char_더": false,

"char_러": false,

"char_머": false,

"char_버": false,

"char_서": false,

"char_어": false,

"char_저": false,

"char_고": false,

"char_노": false,

"char_도": false,

"char_로": false,

"char_모": false,

"char_보": false,

"char_소": false,
```

```
        "char_오": false,

        "char_조": false,

        "char_구": false,

        "char_누": false,

        "char_두": false,

        "char_루": false,

        "char_무": false,

        "char_부": false,

        "char_수": false,

        "char_우": false,

        "char_주": false,

        "char_바": false,

        "char_사": false,

        "char_아": false,

        "char_자": false,

        "char_배": false,

"DO_NOT_SELECT_THIS_-_INVERSE_CHARACTERS": false,

        "char_inverse_가": false,

        "char_inverse_나": false,

        "char_inverse_다": false,

        "char_inverse_라": false,
```

```
        "char_inverse_마": false,

        "char_inverse_거": false,

        "char_inverse_너": false,

        "char_inverse_더": false,

        "char_inverse_러": false,

        "char_inverse_머": false,

        "char_inverse_버": false,

        "char_inverse_서": false,

        "char_inverse_어": false,

        "char_inverse_지": false,

        "char_inverse_고": false,

        "char_inverse_노": false,

        "char_inverse_도": false,

        "char_inverse_로": false,

        "char_inverse_모": false,

        "char_inverse_보": false,

        "char_inverse_소": false,

        "char_inverse_오": false,

        "char_inverse_조": false,

        "char_inverse_구": false,

        "char_inverse_누": false,
```

```
            "char_inverse_두": false,

            "char_inverse_루": false,

            "char_inverse_무": false,

            "char_inverse_부": false,

            "char_inverse_수": false,

            "char_inverse_우": false,

            "char_inverse_주": false,

            "char_inverse_바": false,

            "char_inverse_사": false,

            "char_inverse_아": false,

            "char_inverse_자": false,

            "char_inverse_배": false,

            "DO_NOT_SELECT_THIS_-_ETC_NOW_ON": false

        }

    },
```

Referring to the Table 4, the Table 4 may include information on the position 305-1 according to an embodiment. For example, "point" may include position information 306-1 (e.g., 1526.8438538205978, 929.5681063122923) for the position 305-1, and/or information on position information 307-1 (e.g., 1540.1328903654485, 953.156146179402). For example, referring to the Table 4, since the position 305-1 is an area to set the text object, the information (e.g., "car," "truck," and/or "type01" to "typeETC") indicating the type of the license plate may be set to false. For example, referring to the Table 4, since the position 305-1 includes a text object indicating a number (e.g., 5), a variable (e.g., "num_5") corresponding to the number may be set to true. Variables different from variable corresponding to the number may be set to false. For example, referring to the Table 4, a variable (e.g., "NUMBERS") corresponding to the color of the text object may be set to true, but is not limited thereto. For example, in case that the electronic device 101 obtains a data set based on a JSON format for a position 305-2, a data set for the position 305-2 may be indicated as in Table 5 to be described later.

【Table 5】

```
{

    "label": "58도0290",

    "points": [

      [

        1557.0764119601329,

        930.5647840531561

      ],

      [

        1572.0265780730897,

        953.4883720930231

      ]

    ],

    "group_id": null,

    "shape_type": "rectangle",

    "flags": {

      "car": false,

      "truck": false,

      "type01": false,
```

```
        "type02": false,

        "type03": false,

        "type04": false,

        "typeETC": false,

        "DO_NOT_SELECT_THIS_-_NUMBERS": false,

        "num_0": false,

        "num_1": false,

        "num_2": false,

        "num_3": false,

        "num_4": false,

        "num_5": false,

        "num_6": false,

        "num_7": false,

        "num_8": false,

        "num_9": false,

        "DO_NOT_SELECT_THIS_-_INVERSE_NUMBERS": false,

        "num_inverse_0": false,

        "num_inverse_1": false,

        "num_inverse_2": false,

        "num_inverse_3": false,

        "num_inverse_4": false,
```

```
        "num_inverse_5": false,

        "num_inverse_6": false,

        "num_inverse_7": false,

        "num_inverse_8": false,

        "num_inverse_9": false,

"DO_NOT_SELECT_THIS_-_CHARACTERS": false,

        "char_가": false,

        "char_나": false,

        "char_다": false,

        "char_라": false,

        "char_마": false,

        "char_하": false,

        "char_거": false,

        "char_너": false,

        "char_더": false,

        "char_러": false,

        "char_머": false,

        "char_버": false,

        "char_서": false,

        "char_어": false,

        "char_저": false,
```

```
        "char_고": false,

        "char_노": false,

        "char_도": true,

        "char_로": false,

        "char_모": false,

        "char_보": false,

        "char_소": false,

        "char_오": false,

        "char_조": false,

        "char_구": false,

        "char_누": false,

        "char_뉴": false,

        "char_루": false,

        "char_무": false,

        "char_부": false,

        "char_수": false,

        "char_유": false,

        "char_주": false,

        "char_바": false,

        "char_사": false,

        "char_아": false,
```

```
        "char_자": false,

        "char_배": false,

"DO_NOT_SELECT_THIS_-_INVERSE_CHARACTERS": false,

        "char_inverse_가": false,

        "char_inverse_나": false,

        "char_inverse_다": false,

        "char_inverse_라": false,

        "char_inverse_마": false,

        "char_inverse_거": false,

        "char_inverse_너": false,

        "char_inverse_더": false,

        "char_inverse_리": false,

        "char_inverse_머": false,

        "char_inverse_배": false,

        "char_inverse_서": false,

        "char_inverse_어": false,

        "char_inverse_저": false,

        "char_inverse_고": false,

        "char_inverse_노": false,

        "char_inverse_도": false,

        "char_inverse_로": false,
```

```
        "char_inverse_모": false,

        "char_inverse_뵤": false,

        "char_inverse_쇼": false,

        "char_inverse_요": false,

        "char_inverse_죠": false,

        "char_inverse_구": false,

        "char_inverse_누": false,

        "char_inverse_두": false,

        "char_inverse_루": false,

        "char_inverse_무": false,

        "char_inverse_부": false,

        "char_inverse_수": false,

        "char_inverse_우": false,

        "char_inverse_주": false,

        "char_inverse_바": false,

        "char_inverse_사": false,

        "char_inverse_아": false,

        "char_inverse_자": false,

        "char_inverse_배": false,

        "DO_NOT_SELECT_THIS_-_ETC_NOW_ON": false

    }
```

```
    },
```

Referring to Table 5 according to an embodiment, "point" may indicate a relative coordinate with respect to the position information 306 of the virtual license plate 305 based on a shape (e.g., rectangle) for distinguishing the position 305-2. "point" may indicate a coordinate value indicating position information 306-2 and position information 307-2. "point" may be set to a position coordinate (e.g., 1557.0764119601329, 930.5647840531561) of an upper left edge of the position and a position coordinate (e.g., 1572.0265780730897, 953.4883720930231) of a lower right edge. However, it is not limited thereto. For example, since the position 305-2 includes a text object indicating a character (e.g., 도 ), a variable for "num_n" (or "num_inverse_n") may be set to false. For example, since the position 305-2 includes the text object indicating the character (e.g., 도 ), the variable (e.g., "char_도 ") for the character may be set to true and other variables may be set to false. Referring to the Table 5, variables (e.g., "car", "truck", "type01" to "type ETC") indicating a format of the license plate may be set to false. However, it is not limited thereto. For example, the electronic device 101 may obtain the data 310 using an image including the real license plate, and may train a neural network for obtaining the virtual license plate using the image and the data 310. For example, the electronic device 101 may obtain the virtual license plate 305 by disposing a text object and/or a visual object corresponding to the type of virtual license plate at a designated position of the virtual license plate through a learned neural network.

In addition, in the present specification, only a Character and a Number are included as embodiments as a text object disposed at a designated position of the virtual license plate, but this is only described as embodiments, and an embodiment of the present invention are not limited thereto. For example, text that may be disposed at the designated position of the virtual license plate according to the present invention may include text generated based on a writing system for recording a letter used around the world, such as an American Standard Code for Information Interchange (ASCII) Code and/or Unicode. The text that may be disposed at the designated position of the virtual license plate may include text having a standard defined for information exchange through a computer.

Hereinafter, an example of the virtual license plate obtained by the electronic device 101 according to an embodiment will be described later with reference to FIG. 4.

FIG. 4 illustrates an example of a virtual license plate obtained by an electronic device according to an embodiment. An electronic device 101 of FIG. 4 may include the electronic device 101 of FIGS. 1 to 3. At least one of operations of FIG. 4 may be performed by a processor 120 of FIG. 1. Referring to FIG. 4, an example of a virtual license plate 401 obtained by the electronic device 101 according to an embodiment is illustrated.

For example, the electronic device 101 may obtain a virtual license plate 401-1 using data 310 of FIG. 3. The electronic device 101 may obtain the virtual license plate 401-1 based on a license plate rule corresponding to a first nation (e.g., Korea).

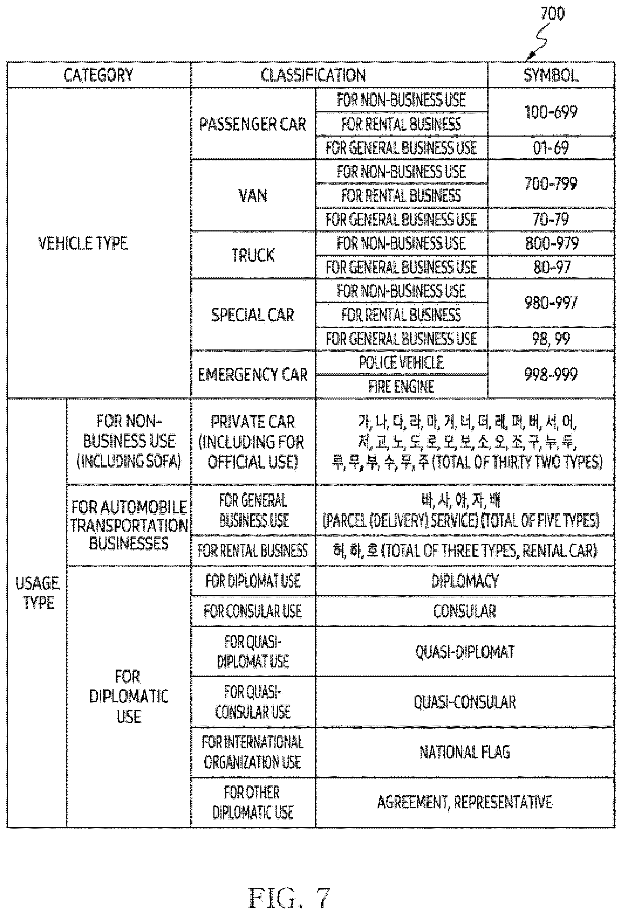

For example, the virtual license plate 401-1 may be obtained based on a designated color (e.g., white). Text objects included in the virtual license plate 401-1 may include different information according to a position disposed on the virtual license plate 401-1. According to the number and/or position of text objects included in the virtual license plate 401-1, the text objects may include time information (e.g., a revision year of the license plate rule). A table indicating the text objects including the different information according to the disposed positions will be described later with reference to FIGS. 7 to 8B.

For example, a text object (e.g., 12) indicating a number disposed at a first position 411 may indicate a type of vehicle (e.g., a passenger car). For example, a text object (e.g., 가 ) indicating a number disposed at a second position 412 may indicate a use of the vehicle. For example, a text object indicating a number disposed at a third position 413 may indicate a serial number for specifying the vehicle. However, it is not limited thereto. A position of an upper left edge of the first position 411 and/or a position of a lower right edge may be indicated based on the "point" of FIG. 3. The number of text objects included in the first position 411 may be one or more. Hereinafter, an overlapping description among descriptions of positions will be omitted.

The electronic device 101 according to an embodiment may obtain a virtual license plate 401-2 by using data corresponding to the virtual license plate 401-2 different from the virtual license plate 401-1. The virtual license plate 401-2 may include information on a region.

For example, a text object indicating a character disposed at the first position 421 may indicate a region name (e.g., Seoul) (region name, county name, province name). A text object (e.g., 52) indicating a number disposed at the second position 422 may indicate the type of the vehicle. A text object (e.g., 바 ) indicating a character disposed at the third position 423 may indicate the use of the use vehicle. A text object (e.g., 3108) indicating a number disposed at a fourth position 424 may indicate a serial number for specifying a vehicle to which a license plate is attached. However, it is not limited thereto.

For example, based on obtaining the virtual license plate 401-1 or the virtual license plate 401-2, the electronic device 101 may process the virtual license plate 401-1 or the virtual license plate 401-2 based on gray scaling.

For example, the electronic device 101 may obtain a virtual license plate including a visual object (e.g., Taegeuk mark) indicating the first nation (e.g., Korea) and/or a text object (e.g., KOR) indicating the first nation. Colors of an area and another area of the virtual license plate including the visual object and/or the text object may be different.

The electronic device 101 according to an embodiment may obtain a virtual license plate 401-3 according to a license plate rule corresponding to a second nation (e.g., China). For example, the electronic device 101 may generate the virtual license plate 401-3 using data corresponding to the virtual license plate 401-3.

For example, the virtual license plate 401-3 may include information on a region, information on a time, and/or information for specifying the vehicle. For example, the text object (e.g., 京 ) indicating the character disposed at the first position 431 may indicate the information (e.g., Beijing) on the region. For example, the text object indicating the character disposed at the first position 431 may be an abbreviation of a province included in the second nation. A text object (e.g., N) indicating a character disposed at a second position 432 may include information on the region or the use. The text object indicating the character disposed at the second position 432 may include information on a location of the provincial government included in the second nation, a city under the direct control of the central government, the use, and/or time. However, it is not limited thereto. A text object (e.g., 888R8) indicating a number or a character disposed at a third position 433 may indicate the serial number for specifying the vehicle.

For example, a color of the virtual license plate 401-3 may include information on the vehicle according to the license plate rule corresponding to the second nation. For example, a first color (e.g., blue) may indicate the passenger car. A second color (e.g., yellow) may represent a heavy passenger car, a bus, a truck, and/or a motorcycle. A third color (e.g., white) may indicate the use (e.g., a police vehicle, a military vehicle) of the vehicle. A fourth color (e.g., black) may indicate the use (e.g., a vehicle related to a foreign company, embassy, or consulate) of the vehicle. A fifth color (e.g., green) may indicate the type (e.g., electric vehicle) of the vehicle. However, it is not limited thereto.

The electronic device 101 according to an embodiment may obtain a virtual license plate 401-4 based on a license plate rule corresponding to a third nation (e.g., Europe). For example, the electronic device 101 may obtain the virtual license plate 401-4 by using data corresponding to the virtual license plate 401-4.

For example, the virtual license plate 401-4 may include information on the region. For example, a visual object disposed at a first position 441 may represent a coalition organization (e.g., the EU) related to the third nation. A text object (e.g., EST) indicating a character disposed at a second position 442 may indicate information on a nation. Spaces and text objects disposed at a third position 443, a fourth position 444, and a fifth position 445 may indicate the serial number for specifying the vehicle. According to an embodiment, a visual object (e.g., a flag) may be disposed at the third position 443, the fourth position 444, or the fifth position 445. According to an embodiment, the number of the spaces and the text objects disposed at the third position 443, the fourth position 444, and the fifth position 445 may be different. A color of the virtual license plate 401-4 may include the information (e.g., yellow or white in case of the United Kingdom) on the nation. However, it is not limited thereto. For example, the virtual license plate corresponding to a fourth nation (e.g., the United States) may further include a visual object.

The electronic device 101 according to an embodiment may obtain a virtual license plate 401-5 based on a license plate rule corresponding to a fifth nation (e.g., Japan). For example, the electronic device 101 may obtain the virtual license plate 401-5 using data corresponding to the virtual license plate 401-5. For example, the virtual license plate 401-5 may include the information on the region. For example, a text object disposed at a first position 451 may indicate the region. A text object disposed at a second location 452 may indicate a use of a business for using the vehicle. A text object (e.g., 500) disposed at a third position 453 may indicate the type and/or the use of the vehicle. A text object (e.g., 46-49) disposed at a fourth position 454 may indicate information for identifying the vehicle. A color of the virtual license plate 401-5 may be divided into a first color (e.g., white), a second color (e.g., green), a third color (e.g., yellow), and/or a fourth color (e.g., black) according to the use of using the vehicle. However, it is not limited thereto.

For example, the electronic device 101 may identify sub-positions 451-1, 451-2, 452, 453-1, 453-2, 453-3, 454-1, 454-2, 454-3, 454-4, and 454-5 for setting the text object according to a type of the virtual license plate 401-5. The number of the sub-positions may be different according to the type of virtual license plate. For example, referring to the drawing, the number of the text objects included in sub-positions is illustrated as one, but according to an embodiment, a plurality of text objects may be included. The electronic device 101 may obtain data sets based on a JSON format, as shown in Tables 1 to 9 of FIG. 3, based on a total of 12 data sets including one data set related to the type of the virtual license plate 401-5, and the number (For example, and a total of 11 including 4 characters (451-1, 451-2, 452, and 454-3) and 7 numbers (453-1, 453-2, 453-3, 454-1, 454-2, 454-4, and 454-5) of the sub-positions 451-1, 451-2, 452, 453-1, 453-2, 453-3, 454-1, 454-2, 454-3, 454-4, and 454-5 in the virtual license plate 401-5. Each of the data sets may include at least some different information based on each type (e.g., the number or the character) of the text objects included in the sub-positions 451-1, 451-2, 453-1, 453-2, 453-3, 454-1, 454-2, 454-3, 454-4, and 454-5. The electronic device 101 may train the neural network to obtain the virtual license plate 401-5 by setting a designated text object (e.g., the number or the character) according to the type of the virtual license plate 401-5 for each of the sub-positions based on information corresponding to the type of the virtual license plate 401-5.

In other words, the electronic device 101 according to an embodiment may generate designated characters in a coordinate value of a virtual license plate 401-5 area according to the type of the virtual license plate 401-5, and the coordinate values for the sub-areas 451-1, 451-2, 453-1, 453-2, 454-3, 454-2, 454-3, 454-4, and 454-5 in the virtual license plate 401-5, from the data file labeled in the JSON format. In addition, in the present specification, since rectangle is used in a form of a designated area within the virtual license plate 401-5, it has been described that is expressed with only two values indicating a left-top coordinate and a right-bottom coordinate located in the virtual license plate 401-5 of the designated area, respectively, but this is not limited thereto. In other words, in case that another form such as an N-polygon or a circular shape is used in the form of the designated area in the virtual license plate 401-5, values necessary to easily designate a position of the area according to the form may be used.

The electronic device 101 according to an embodiment may obtain the virtual license plate 401 based on various types according to the license plate rule corresponding to the nation. As an example of the virtual license plate 401, FIG. 4 illustrates a vehicle license plate stipulated in each nation, such as Korea, the United States, Europe, China, and Japan, but this is only an embodiment and does not limit the embodiment of the present invention. In addition, the electronic device 101 may train a neural network for identifying the license plate to identify a virtual license plate based on various types, based on obtaining virtual license plates 401 based on the various types. The electronic device 101 may set the visual object and/or the text object in different positions according to the type of the license plate (e.g., the virtual license plate 401-1, 401-2, 401-3, 401-4, and 401-5) and the license plate rule corresponding to the nation. The electronic device 101 may train the neural network to identify (or set) a text object and/or a visual object included in the license plate based on position information according to the type of the license plate.

The virtual license plate 401 obtained by the electronic device 101 according to an embodiment as described above may not be an existing license plate. For example, the virtual license plate 401 obtained by the electronic device 101 and the vehicle included in the image to be attached with the virtual license plate 401 may not match. The electronic device 101 may randomly mix text objects included in the virtual license plate 401 in order to generate the virtual license plate 401 that does not exist. The electronic device 101 may reduce infringement of personal information based on generating the virtual license plate 401 that does not exist.

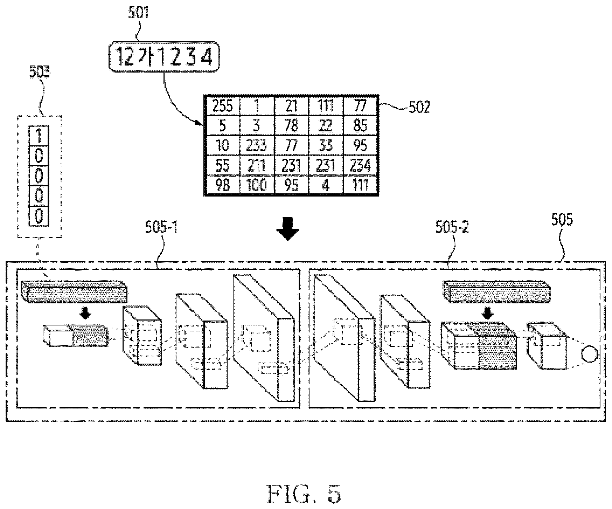

Hereinafter, an example of a neural network for obtaining the virtual license plate according to an embodiment will be described with reference to FIG. 5.

FIG. 5 illustrates an example of a neural network used by an electronic device to obtain a virtual license plate according to an embodiment. The electronic device of FIG. 5 may include an electronic device 101 of FIGS. 1 to 4. At least one of operations of FIG. 5 may be performed by a processor 120 of FIG. 1.

Referring to FIG. 5, the electronic device according to an embodiment may include a neural network 505 (e.g., conditional generative adversarial nets (CGAN). The neural network 505 may include one or more neural networks (e.g., a generator neural network or a discriminator neural network).

For example, the neural network 505 may include one or more layers. Each of the one or more layers may include a function for calculating data and/or a filter. Each of the one or more layers may be a convolutional filter, a fully connected layer, or various types of filters or layers grouped based on a special function or feature. The neural network 505 may include the one or more layers to form a deep neural network. Training the deep neural network is called deep learning.

For example, nodes included in the one or more layers may be connected to each other through a connection line having a connection weight. Tuning of the neural network may be performed based on, for example, supervised learning, unsupervised learning, and/or adversarial learning. For example, the neural network 505 may include a generator neural network 505-1 for obtaining a license plate and/or a discriminator neural network 505-2 for determining the obtained license plate. The electronic device may generatively train a neural network for generating the license plate, by using the generator neural network 505-1 and/or the discriminator neural network 505-2. For example, in an embodiment, the electronic device may use a Generative Adversarial Network (GAN) that simultaneously competitively train two neural networks to generate the license plate.

The electronic device according to an embodiment may identify license plates based on a designated number (e.g., 30). The types of license plates may be different. The electronic device may identify information on at least one license plate 501 among the identified license plates. The electronic device may use the neural network 505 to generate the license plate 501 among the identified license plates.

For example, the electronic device may identify data set 502 for the license plate 501. The data set 502 may be inputted to the neural network 505. The electronic device may train the neural network 505 so as to obtain an image corresponding to the license plate 501 by inputting the data set 502 into the neural network 505. For example, the electronic device may identify a template corresponding to a nation's license plate rule for the license plate 501 in order to obtain an image for the license plate 501. The electronic device may obtain the license plate through the neural network 505 by using the template, license plates based on the designated number (e.g., 30), and a condition vector 503 corresponding to the license plate to be obtained. However, it is not limited thereto.

For example, the electronic device may input the obtained license plate into the discriminator neural network 505-2, based on obtaining the license plate by using the generated neural network 505-1. The electronic device may determine whether the obtained license plate is obtained or is one of license plates based on the designated number, by using the discriminator neural network 505-2. The electronic device may obtain license plates based on the various types, based on performing adversarial learning, by using the generator neural network 505-1 and the discriminator neural network 505-2.

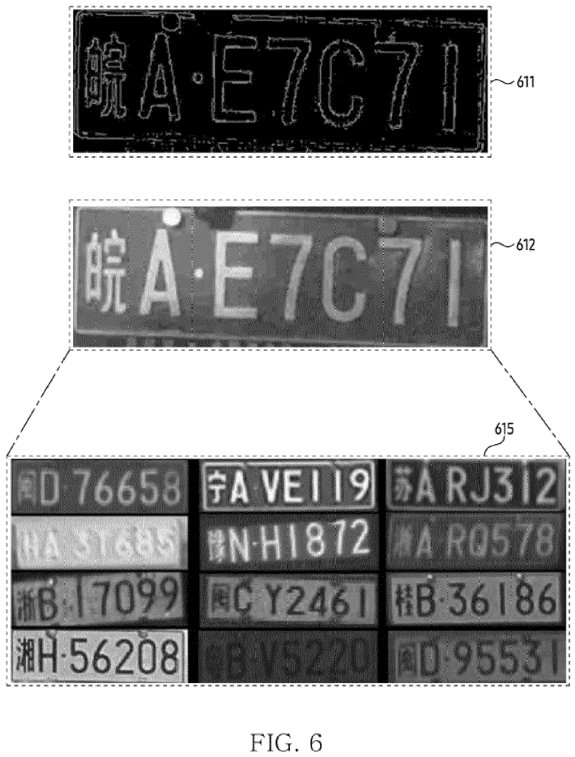

Hereinafter, an example of the virtual license plate obtained by the electronic device using the neural network 505 will be described with reference to FIG. 6.

FIG. 6 illustrates an example of a virtual license plate obtained by an electronic device using a neural network according to an embodiment. An electronic device 101 of FIG. 6 may include the electronic device 101 of FIGS. 1 to 5. At least one of operations of FIG. 6 may be performed by a processor 120 of FIG. 1.

Referring to FIG. 6, the electronic device 101 according to an embodiment may obtain a virtual license plate 611 based on an outline using a template through a neural network 505 of FIG. 5.

For example, the electronic device 101 may obtain a virtual license plate 612 similar to a real license plate, based on changing at least some of the values of pixels included in the virtual license plate 611 based on the outline, using the virtual license plate 611 based on the outline. The electronic device 101 may obtain the virtual license plate 612 through the neural network (e.g., cycle GAN). For example, the electronic device 101 may train the neural network so as to change the outline-based virtual license plate 611 to the virtual license plate 612 similar to the real license plate. For example, the virtual license plate 612 obtained by the electronic device 101 through the neural network may be stored in memory as labeling data 615 for learning the neural network for identifying the license plate. The electronic device 101 may store the labeling data 615 including one or more virtual license plates in the memory in order to learn the neural network for identifying the license plate.

Hereinafter, an example of a table showing at least some of a country-specific license plate rule corresponding to a template to be used by the electronic device 101 to obtain the virtual license plate according to an embodiment will be described with reference to FIGS. 7 to 8B.

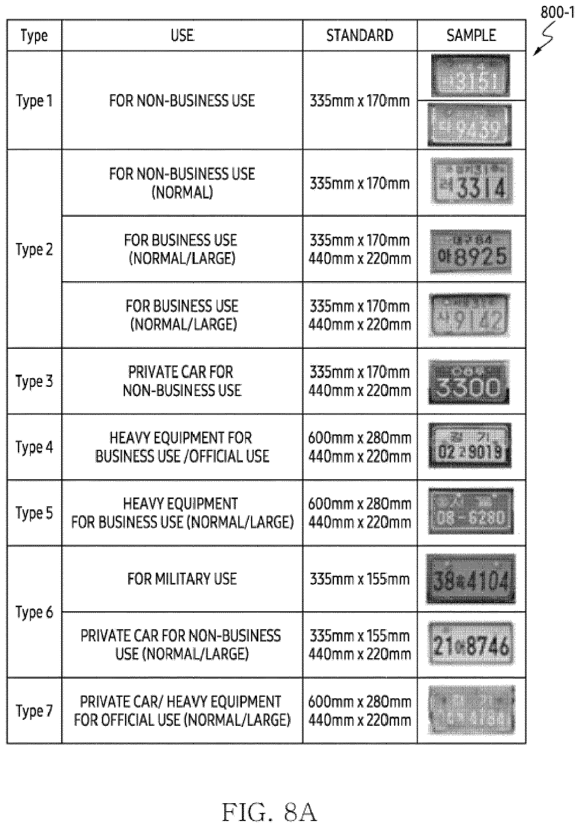

FIG. 7 illustrates an example of a table indicating a license plate for being identified by an electronic device according to an embodiment. FIGS. 8A to 8B illustrate an example of a table indicating a type of a license plate for being identified by an electronic device according to an embodiment. An electronic device 101 of FIGS. 7 to 8B may include the electronic device 101 of FIGS. 1 to 6.

Referring to FIG. 7, according to an embodiment, a table 700 may indicate information on text objects to be used by the electronic device 101 to obtain a virtual license plate corresponding to a first nation (e.g., Korea). For example, referring to the table 700, the classification column may be divided into a type of vehicle (e.g., for each vehicle type) and a use of the vehicle (e.g., for each use).

For example, the classification column can be classified into a special car such as a passenger car, a van, a truck, a crane, and a snow removal vehicle, and an emergency car such as a fire engine and a police vehicle. The symbol column may be divided into a range of numbers to be assigned to each vehicle type.

The electronic device 101 according to an embodiment may dispose a text object indicating at least one number included within a range of numbers corresponding to the symbol column at a first position (e.g., 411) of FIG. 4 or a second position (e.g., 422) of FIG. 4.

For example, the passenger car may be classified into for non-business use, for rental business, and for general business use. The passenger car for non-business use and/or for rental business may correspond to a first range (e.g., 100 to 699). The passenger car for general business use may correspond to a second range (e.g., 01 to 69).

For example, the van may be classified into for non-business use, for rental business, and for general business use. The van for non-business use and/or for rental business may correspond to a third range (e.g., 700 to 799). The van for general business use may correspond to a fourth range (e.g., 70 to 79).

For example, the truck may be classified into for non-business use and for general business use. The truck for non-business use may correspond to a fifth range (e.g., 800 to 979). The truck for general business use may correspond to a sixth range (e.g., 80 to 97).

For example, the special car may be classified into for non-business use, for rental business, and for general business use. The special car for non-business use and for rental business may correspond to a seventh range (e.g., 980 to 997).

For example, the emergency car may be classified into the police vehicle and the fire engine. The emergency car may correspond to an eighth range (e.g., 998 to 999). However, it is not limited to the above example.

According to an embodiment, a use-specific column may be divided into for non-business use, for automobile transportation businesses, and for diplomatic use. The use-specific column may correspond to text objects indicating a character.

The electronic device 101 according to an embodiment may dispose at least one of the text objects at a second position 412 of FIG. 4 and/or a third position 423 of FIG. 4.

For example, for non-business use may be classified as a private car. The private car may correspond to first text objects (e.g., 가, 나, 다, 라, 마, 거, 너, 더, 러, 머, 버, 서, 어, 저, 고, 노, 도, 로, 모, 보, 소, 오, 조, 구, 누, 두, 루, 무, 부, 수, 무, and 주).

For example, for automobile transportation businesses may be classified into for general and for rental businesses. For example, the automobile transportation business for general may correspond to second text objects (e.g., 바, 사, 아, 자, and 배). The automobile transportation business for rental businesses may correspond to third text objects (e.g., 허, 하, and 호).

For example, for diplomatic use may be classified into for diplomat use, for consular use, for quasi-diplomat use, for quasi-consular use, for international organization use, and for other diplomatic use. For example, a text object related to for diplomatic use may be disposed at a first position 421 of FIG. 4. For example, in case that the electronic device 101 obtains the virtual license plate using the text object related to for diplomatic use, a color of the virtual license plate obtained using the text object may be a second color (e.g., navy) different from a first color (e.g., white). However, it is not limited thereto.

For example, for diplomat use may correspond to a fourth text object (e.g., diplomacy). For consular use may correspond to a fifth text object (e.g., consular). For quasi-diplomat use may correspond to a sixth text object (e.g., quasi-diplomat). For quasi-consular use may correspond to a seventh text object (e.g., quasi-consular). For international organization use may correspond to an eighth text object (e.g., a national flag). For other diplomatic uses may correspond to ninth text objects (e.g., an agreement, a representative). However, it is not limited thereto.

The electronic device 101 according to an embodiment may obtain a virtual license plate by disposing at least one text object among a text object indicating at least one number included in a range of numbers corresponding to each vehicle type and text objects indicating a character corresponding to each use in a background template. The electronic device 101 may obtain a virtual license plate similar to a real license plate based on identifying the text object indicating the number and the text object indicating the character using the table 700 corresponding to a country-specific license plate rule.

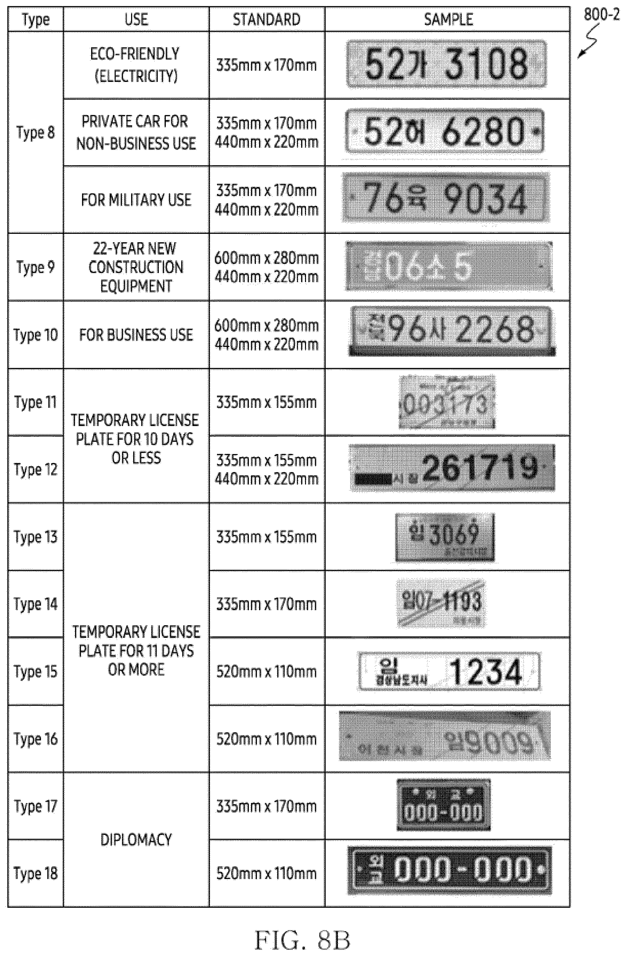

Referring to FIG. 8A, a table 800-1 indicating a type of the license plate according to an embodiment is illustrated. Referring to FIG. 8B, a table 800-2 indicating a type of the license plate according to an embodiment is illustrated. The table 800-1 and the table 800-2 may include a use, a specification, and a sample according to the type. For example, colors of license plates included in the sample may be different according to the type. For example, the electronic device 101 may identify data for obtaining the virtual license plate using information related to the type included in the table 800-1 and the table 800-2. For example, the information related to the type may be included in line information 313 of FIG. 3. In case that the electronic device 101 selects information on a first type (e.g., Type01) in the line information 313 and does not select information on another type (e.g., Type02 to Type 17), the electronic device 101 may obtain a virtual license plate (e.g., a virtual license plate similar to a sample corresponding to type 1) corresponding to the first type. However, it is not limited thereto.

For example, by using a license plate rule corresponding to another nation that is different from a nation (e.g., Korea) related to the table 700, the table 800-1 and/or the table 800-2, the electronic device 101 may obtain a virtual license plate similar to a real license plate of the other country.

As described above, the electronic device 101 according to an embodiment may obtain the virtual license plate based on a designated size by mixing a text object indicating at least one number included in the table 700 and a text object indicating at least one character included in the table 800-1 and the table 800- 2. The electronic device 101 may obtain the virtual license plate similar to the real license plate by using information included in the table 700, the table 800-1 and/or the table 800-2 corresponding to the country-specific license plate rule. The electronic device 101 may train a neural network for identifying the license plate based on obtaining the virtual license plate similar to the real license plate.

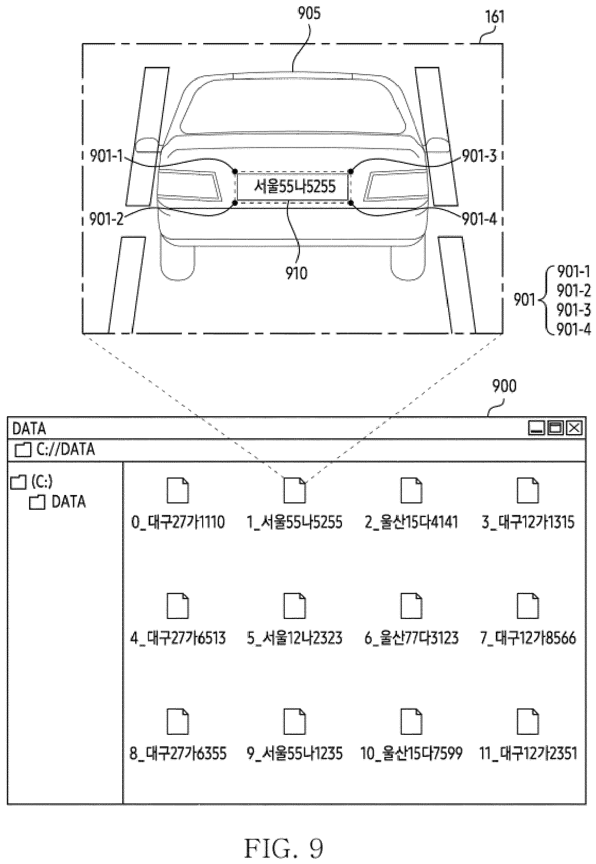

Hereinafter, an example of an operation in which the electronic device 101 according to an embodiment obtains position information of a real license plate attached to a vehicle included in an image indicating a real environment will be described later with reference to FIGS. 9 to 10.

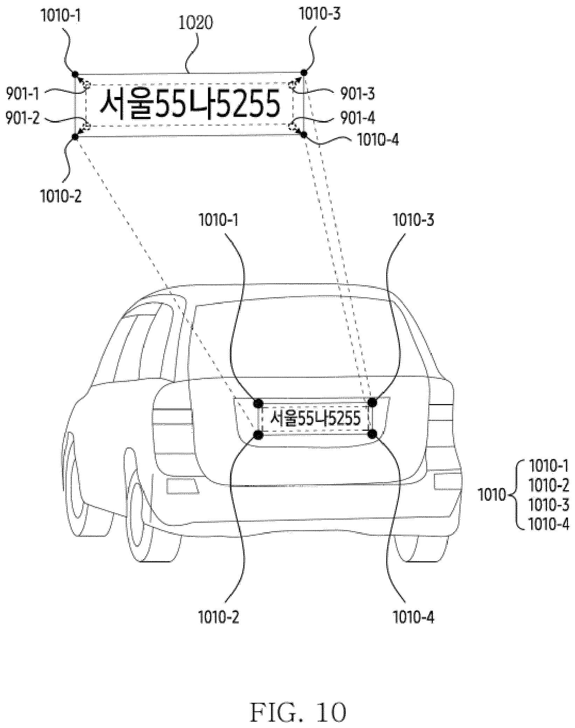

FIG. 9 illustrates an example of an image to be used by an electronic device to obtain position information according to an embodiment. FIG. 10 illustrates an example of an operation in which an electronic device obtains position information of a real license plate attached to a vehicle according to an embodiment. An electronic device 101 of FIGS.

9 to 10 may include the electronic device 101 of FIGS. 1 to 8B. At least one of operations of FIGS. 9 to 10 may be performed by a processor 120 of FIG. 1.

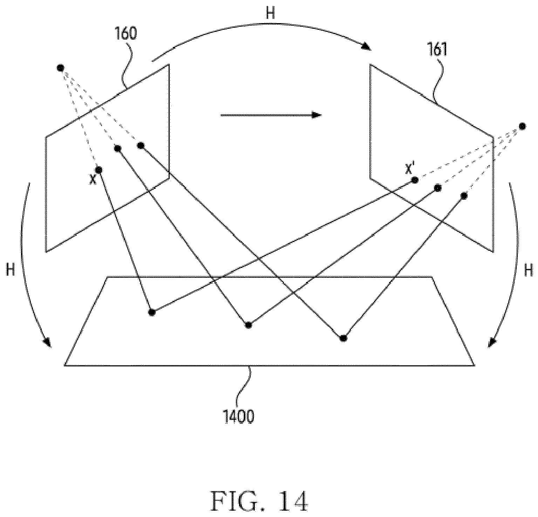

Referring to FIG. 9, the electronic device 101 according to an embodiment may identify one or more images 900 including a vehicle in memory (e.g., memory 130 of FIG. 1). The one or more images 900 may indicate an image indicating a real environment including the vehicle. The one or more images 900 may include a second image 161. Each of the one or more images 900 may be merged with a first image (e.g., a first image 160 of FIG. 1) including a virtual license plate obtained by the electronic device 101. An operation in which the electronic device 101 merges the second image 161 and the first image among the one or more images 900 will be described later with reference to FIGS. 14 to 15.

The electronic device 101 according to an embodiment may identify a vehicle 905 from the second image 161 corresponding to the vehicle. For example, the electronic device 101 may identify a real license plate 910 attached to the vehicle 905. The electronic device 101 may identify vertices 901 of the real license plate 910. For example, the electronic device 101 may identify inputs indicating selecting the vertices. However, it is not limited thereto. For example, the electronic device 101 may identify edges (e.g., edges configuring a bounding box) corresponding to the real license plate 910 using the vertices 901.

Referring to FIG. 10, the electronic device 101 according to an embodiment may change positions of the edges of the real license plate 910 obtained using the vertices 901. For example, the electronic device 101 may identify the position information of the real license plate 910 by using pixels included in the second image 161. For example, the electronic device 101 may identify pixels including the real license plate 910 among pixels included in the second image 161 by using the position information of the vertices 901. The electronic device 101 may identify the edges and/or vertices of the real license plate 910 using pixels including the real license plate 910. For example, the electronic device 101 may identify edges (e.g., edges to be obtained using vertices 1010) adjacent to the edges of the real license plate 910 obtained using the vertices 901.

For example, a sub-image 1020 cropped from the second image 161 based on the edges of the real license plate 910 may include the vertices 1010 of the real license plate 910.

For example, the electronic device 101 may change first edges corresponding to the real license plate 910 identified using the vertices 901 of FIG. 9 to second edges of the identified real license plate 910 using pixels including the real license plate 910. The second edges may be identified based on the vertices 1010 of FIG. 10. For example, the electronic device 101 may change the position of each of the vertices 901 of FIG. 9 to the position of each of the vertices 1010 of FIG. 10. For example, a position of a vertex 901-1 may be changed to a position of a vertex 1010-1. A position of a vertex 901-2 may be changed to a position of a vertex 1010-2. A position of a vertex 901-3 may be changed to a position of a vertex 1010-3. A position of a vertex 901-4 may be changed to a position of a vertex 1010-4.

For example, the electronic device 101 may identify position information (e.g., coordinate value) of each of the second edges existing at the shortest distance (e.g., Manhattan distance) from each of the first edges corresponding to the real license plate 910 identified using the vertices 901 of FIG. 9. The position information of the second edges may correspond to the position information of the real license plate 910 included in the second image 161. For example, based on identifying each of the vertices 1010, the electronic device 101 may identify the position information of the real license plate included in the second image 161. The position information may be used by the electronic device 101 to project the virtual license plate.

For example, the electronic device 101 may identify first position information of the real license plate 910 by using the input to the vertices 901 of FIG. 9, and may identify the pixels including the real license plate 910 among the pixels included in the second image 161 by using the approximate first position information of the identified real license plate 910. The electronic device 101 may identify the edges configuring the real license plate 910 within pixels including the real license plate 910. The electronic device 101 may obtain the position information of the real license plate 910 using the edges.

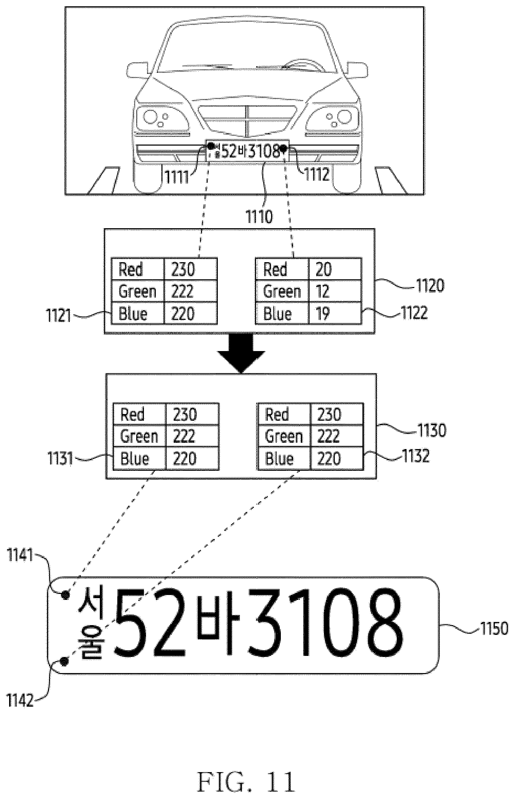

Hereinafter, in FIGS. 11 to 12, an example of an operation for changing a color of a virtual license plate obtained by the electronic device 101 according to an embodiment using a template will be described later.

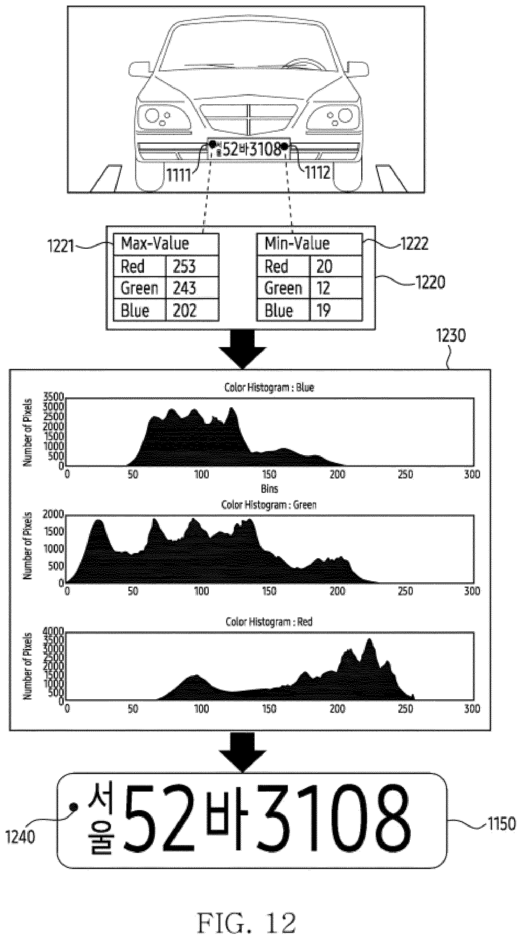

FIG. 11 illustrates an example of an operation in which an electronic device uses color information of a real license plate in order to change a color of a virtual license plate according to an embodiment. FIG. 12 illustrates an example of an operation in which an electronic device changes a color of a virtual license plate using a histogram indicating a color for a real license plate according to an embodiment. An electronic device 101 of FIGS. 11 to 12 may include the electronic device 101 of FIGS. 1 to 10.

Referring to FIG. 11, the electronic device 101 according to an embodiment may identify a real license plate 1110 in a second image 161. The electronic device 101 may identify color information of each pixel included in the real license plate 1110 in the second image 161.

For example, the electronic device 101 may identify at least a portion of the real license plate 1110. The electronic device 101 may identify text objects included in the real license plate 1110. The electronic device 101 may sample pixels included in the at least portion of the real license plate that are different from another portion including the text objects. The electronic device 101 may identify a RGB value corresponding to the other portion for temporarily refraining from obtaining color information for the other portion including text objects. For example, the electronic device 101 may temporarily refrain from obtaining of color information for pixels less than a designated value (e.g., 90) among RGB values for each pixel included in the real license plate 1110. The electronic device 101 may temporarily refrain from obtaining of color information corresponding to the other portion based on temporarily refrain from obtaining of color information for a pixel having a RGB value less than the designated value.

For example, the electronic device 101 may obtain color information 1120 including a RGB value 1121 for a first area 1111 and a RGB value 1122 for a second area 1112 among the portion of the real license plate 1110. For example, the electronic device 101 may obtain the color information 1120 including RGB values (e.g., about 300) for a plurality of areas including the first area 1111 and the second area 1112.

The electronic device 101 according to an embodiment may identify color information 1130 for a virtual license plate 1150 (or a first image 160 of FIG. 1, including the virtual license plate 1150. For example, the electronic device 101 may change a color of at least one of pixels included in the virtual license plate 1150 by using the color information 1120.

For example, the electronic device 101 may change the color for at least a portion of the virtual license plate 1150. The electronic device 101 may change the color of at least a portion of the virtual license plate 1150 that is different from other portions including text objects included in the virtual license plate 1150. For example, the electronic device 101 may obtain color information of the virtual license plate 1150 including a RGB value 1131 for a first area 1141 and a RGB value 1132 for a second area 1142 included in at least a portion of the virtual license plate 1150. For example, since the virtual license plate 1150 is generated by the electronic device 101, the color for at least a portion of the virtual license plate 1150 may be substantially the same. However, it is not limited thereto.

For example, the electronic device 101 may change the color of at least one of the pixels included in the virtual license plate 1150 (or the first image 160 including the virtual license plate 1150), based on changing each of the RGB values (e.g., the RGB value 1131 and the RGB value 1132) corresponding to the color (e.g., the color information 1130) of the virtual license plate 1150, by using the color information 1120 indicating RGB values corresponding to the color of the real license plate 1110. For example, the electronic device 101 may change an RGB value for an area of the virtual license plate 1150, by using at least one of the RGB values included in the color information 1120. For example, the electronic device 101 may change (or replace) the RGB value 1132 for the second area 1142 of the virtual license plate 1150, by using the RGB value 1121 for the first area 1111 of the real license plate 1110. However, it is not limited thereto.

Referring to FIG. 12, the electronic device 101 according to an embodiment may obtain an RGB value for the first area 1111 having the largest RGB value and the second area 1112 having the smallest RGB value among pixels included in the second image 161, in the second image 161. For example, a RGB value 1221 for the first area 1111 may be the largest among RGB values of pixels included in the second image 161. For example, a RGB value 1222 for a second area 1111 may be the smallest among RGB values of pixels included in the second image 161. The electronic device 101 may obtain color information 1220 including the RGB value 1121 and the RGB value 1222. The color information 1220 may be indicated as a histogram 1230 based on color and frequency.

For example, the electronic device 101 may identify color information for the virtual license plate 1150 (or the first image 160 including the virtual license plate 1150). The color information on the virtual license plate 1150 may be indicated as a histogram (not illustrated). The electronic device 101 may change a histogram for the virtual license plate 1150, by using the histogram 1230 for the real license plate 1110. The electronic device 101 may change the histogram for the virtual license plate 1150, similar to the histogram 1230 for the real license plate 1110. For example, based on changing the histogram for the virtual license plate 1150, the electronic device 101 may change the color information of the virtual license plate 1150 corresponding to the histogram. For example, the electronic device 101 may change a color for at least a portion 1240 of the virtual license plate 1150 by using the histogram 1230. At least a portion 1240 may be different from another portion including text objects in the virtual license plate 1150. For example, the electronic device 101 may use Equation 1 to change the color of at least one of the pixels included in the virtual license plate 1150 (or the first image 160 including the virtual license plate 1150).

【Equation 1】

$$X\_new = (X\_input - X\_min / X\_max - X\_min) * 255$$

X_new may mean at least one of RGB values for at least one pixel of the virtual license plate 1150 whose color is changed. X_input may mean at least one of RGB values for the at least one pixel before the color is changed. X_min may mean the smallest value (e.g., one value among the RGB values 1222) among RGB values obtained using the real license plate 1110. X_max may mean the largest value (e.g., one value among the RGB values 1221) among RGB values obtained using the real license plate 1110. For example, the electronic device 101 may change the color of at least one of the pixels included in the virtual license plate 1150 by using Equation 1.

The electronic device 101 according to embodiment as described above may obtain the virtual license plate 1150 having a color similar to that of the real license plate 1110 based on changing the color of the virtual license plate 1150 using color information on the real license plate 1110.

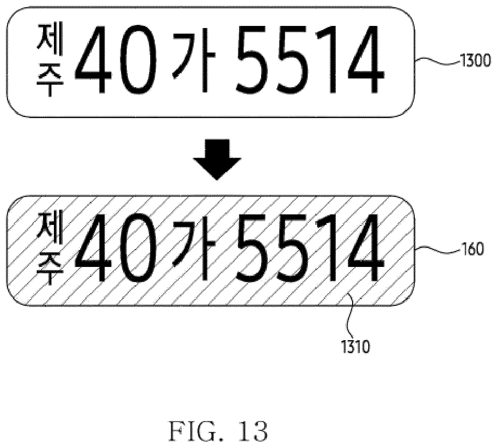

Hereinafter, with reference to FIG. 13, an example of an operation in which the electronic device 101 according to an embodiment obtains noise using the virtual license plate 1150 whose color is changed will be described.

FIG. 13 illustrates an example of a virtual license plate based on noise obtained by an electronic device according to an embodiment. An electronic device 101 of FIG. 13 may include the electronic device 101 of FIGS. 1 to 12. At least one of operations of FIG. 13 may be performed by a processor 120 of FIG. 1. A virtual license plate 1300 may be referred to a virtual license plate 1150 whose color is changed.

The electronic device 101 according to an embodiment may merge noise 1310 with the virtual license plate 1300. For example, the electronic device 101 may generate the noise 1310 for the virtual license plate 1300 based on changing parameters indicating pixels included in the virtual license plate 1300.

For example, the electronic device 101 may generate the noise 1310 based on salt and pepper noise for generating at least one point on the virtual license plate 1300. The electronic device 101 may generate the noise 1310 based on Gaussian noise. The electronic device 101 may generate the noise 1310 based on uniform noise. The electronic device 101 may generate the noise 1310 based on at least one of resizing, gradation, filter (e.g., bilateral filter), and/or morphology.

For example, the electronic device 101 may use one or more operations to generate the noise 1310. The electronic device 101 may obtain the noise 1310 by using at least one of salt and pepper noise, gradation, resizing, and/or Gaussian noise. For example, the electronic device 101 may obtain the noise 1310 using at least one of resizing, morphology operation (e.g., dilation), filter (e.g., bilateral filter), salt and pepper noise, and/or gradation. For example, the electronic device 101 may render a first image 160, including the noise 1310, using a filter for changing a parameter value indicating pixels included in the virtual license plate 1300. The electronic device 101 may perform an operation opposite to the filter for removing the noise by using the filter.

For example, the electronic device 101 may change the parameter value for pixels for the virtual license plate 1300 using a kernel (e.g., a kernel related to the morphology operation). The electronic device 101 may generate the noise 1310 for the virtual license plate 1300 based on changing the parameter value to at least one of 0 or 1 using the kernel. Based on generating the noise 1310, the electronic device 101 may obtain a first image (e.g., the first image 160 of FIG. 1) including a virtual license plate similar to a real license plate included in a second image (e.g., a second image 161 of FIG. 1). Based on generating the noise 1310, the electronic device 101 may merge the first image with the second image and may store it as label information for learning a neural network for identifying a license plate.

The electronic device 101 according to an embodiment as described above may obtain a virtual license plate similar to the real license plate based on obtaining the noise 1310 on the virtual license plate 1300 whose color is changed.

Hereinafter, in FIG. 14, an example of an operation in which the electronic device 101 projects the first image including the noise 1310 and the virtual license plate 1300 onto at least a portion of the second image will be described later.

FIG. 14 illustrates an example of an operation by an electronic device for projecting a first image onto a second image, according to an embodiment. An electronic device 101 of FIG. 14 may include the electronic device 101 of FIGS. 1 to 13.

Referring to FIG. 14, the electronic device 101 according to an embodiment may merge a first image 160 including a virtual license plate with a second image 161. The electronic device 101 may project the first image 160 on at least a portion of the second image 161 based on homography. The homography may indicate a certain relationship between projected matching points in case that an image is projected onto another image.

For example, the electronic device 101 may project the first image 160 on at least a portion of the second image 161 using position information of a real license plate identified using the vertices 1010 of FIG. 10. For example, the electronic device 101 may project the virtual license plate (e.g., the virtual license plate included in the first image 160) on the real license plate included in the second image 161, in the second image 161, using a matrix for mapping each of the vertices of the virtual license plate, to each of the vertices 1010 of the real license plate using the position information. For example, the electronic device 101 may project the first image 160 on at least a portion of the second image 161, based on a flat surface 1400. For example, the matrix may be expressed as Equation 2.

【Equation 2】

$$H \begin{bmatrix} x' \\ y' \\ 1 \end{bmatrix} = \begin{bmatrix} h11 & h12 & h13 \\ h21 & h22 & h23 \\ h31 & h32 & h33 \end{bmatrix} \begin{bmatrix} x \\ y \\ 1 \end{bmatrix}$$

For example, H may mean a scale factor based on a homogeneous coordinate. The H may correspond to the matrix. The homogeneous coordinate may mean a coordinate system in which a first coordinate value (e.g., (x, y)) based on a two-dimensional coordinate system is expressed as a second coordinate value (e.g., (x, y, 1)). h11, h12, h13, h21, h22, h23, h31, h32, and/or h33 may indicate an element of the matrix H. For example, referring to FIG. 14, the electronic device 101 may project the virtual license plate onto the real license plate based on mapping one vertex (e.g., x of FIG. 14) of the virtual license plate included in the first image 160 to one vertex (e.g., x' of FIG. 14) of the real license plate included in the second image 161 based on the homography. For example, the electronic device 101 may map each of the vertices of the virtual license plate included in the first image 160 to each of vertices 1110 of the real license plate using the position information of the real license plate based on Equation 2.

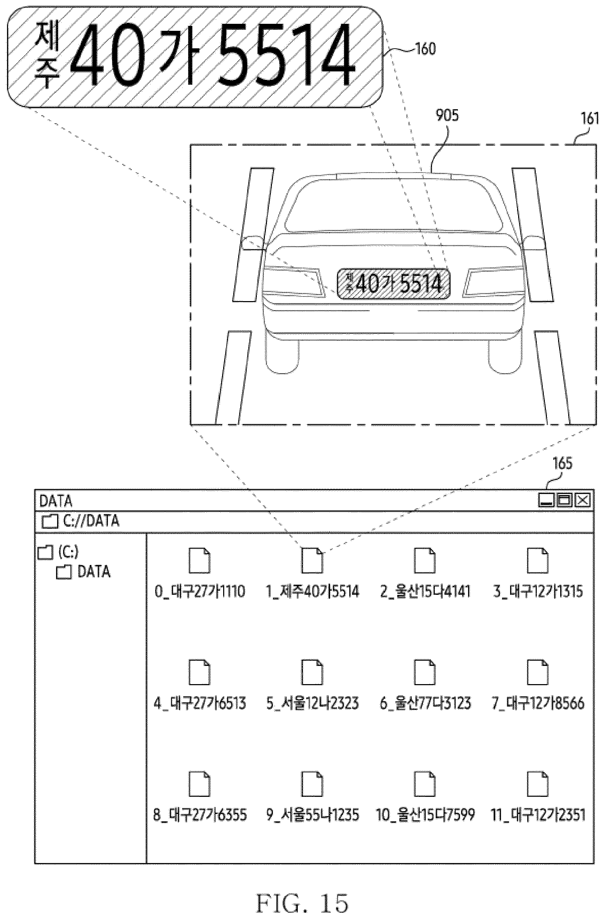

FIG. 15 illustrates an example of an operation in which an electronic device stores a third image obtained by merging a first image including a virtual license plate with a second image as label information, according to an embodiment. An electronic device 101 of FIG. 15 may include the electronic device 101 of FIGS. 1 to 14. At least one of the operations of FIG. 15 may be performed by a processor 120 of FIG. 1.

Referring to FIG. 15, the electronic device 101 according to an embodiment may identify position information of a real license plate (e.g., a real license plate 910 of FIG. 9) attached to a vehicle 905 in a second image 161. For example, based on the homography, the electronic device 101 may project each of the vertices of the first image 160 (or virtual license plate included in the first image) onto each of the vertices of the real license plate.

For example, the electronic device 101 may merge the first image 160 and the second image 161 based on the position information of the real license plate. The electronic device 101 may obtain a third image 162 including the vehicle 905 in which the virtual license plate included in the first image 160 are attached.

For example, the electronic device 101 may store text objects (e.g., 경기 43 가 5181) included in the first image 160, position information indicating a position in the third image merged with the first image 160, and the third image 162 as label information 165. The label information 165 may be used for training a neural network for identifying a license plate.

As described above, the electronic device 101 according to an embodiment may obtain the virtual license plate using a template (e.g., a template 150 of FIG. 1) based on a country-specific license plate rule. The electronic device 101 may identify color information of the real license plate attached to the vehicle 905 included in the second image 161 and position information of the real license plate in the second image 161. The electronic device 101 may change at least one color among pixels included in the virtual license plate by using the color information. The electronic device 101 may generate noise by changing parameters of pixels included in the virtual license plate whose color is changed. The electronic device 101 may obtain the first image 160 including the virtual license plate in which the noise is generated. The electronic device 101 may project the first image 160 on the real license plate included in the second image 161 based on the homography using the position information. The electronic device 101 may use the third image 162 obtained by merging the first image 160 and the second image 161 to learn the neural network. The electronic device 101 may store the third image 162 as the label information 165 in memory. The electronic device 101 may obtain the label information 165 to be used for learning the neural network for identifying the license plate by using the template.

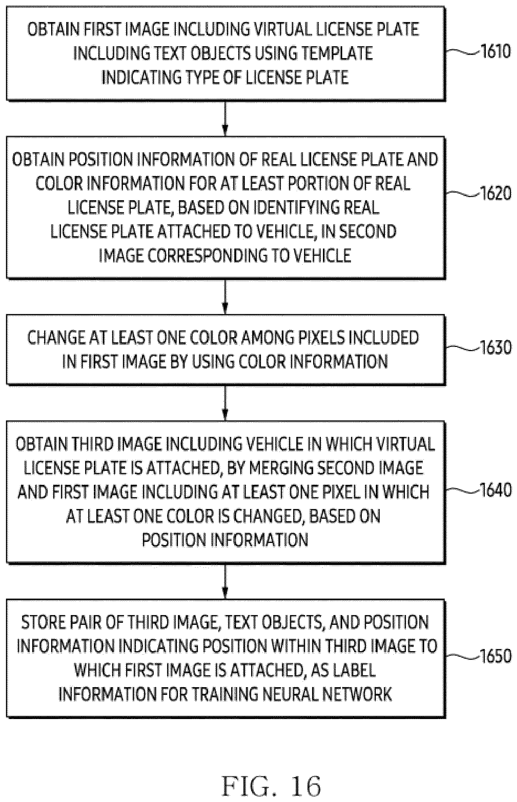

FIG. 16 illustrates an example of a flowchart indicating an operation of an electronic device according to an embodiment. At least one of operations of FIG. 16 may be performed by an electronic device 101 of FIG. 1 and/or a processor 120 of FIG. 1. Each of the operations of FIG. 16 may be performed sequentially, but is not necessarily performed sequentially. For example, an order of each of the operations may be changed, and at least two operations may be performed in parallel.

Referring to FIG. 16, in operation 1610, a processor according to an embodiment may obtain a first image (e.g., a first image 160 of FIG. 1) including a virtual license plate including text objects using a template (e.g., a template 150 of FIG. 1) indicating a type of a license plate. For example, a type of the virtual license plate obtained by the electronic device 101 may vary based on a country-specific license plate rule. The virtual license plate may include a text object indicating a number, a text object indicating a character, a visual object indicating a position (e.g., a nation or a region), and/or a figure. A color of the virtual license plate may be different according to a type of a vehicle. For example, the processor may use a neural network (e.g., a neural network 505 of FIG. 5) based on adversarial learning in order to obtain the virtual license plate. However, it is not limited thereto.

Referring to FIG. 16, in operation 1620, the processor according to an embodiment may obtain position information of a real license plate and color information for at least a portion of the real license plate, based on identifying the real license plate (e.g., a real license plate 910 of FIG. 9) attached to the vehicle, in a second image (e.g., a second image 161 of FIG. 1) corresponding to the vehicle (e.g., a vehicle 905 of FIG. 9). For example, the processor may indicate color information on at least a portion of the real license plate using a histogram. The processor may obtain the color information including RGB values for at least a portion of the real license plate. The histogram may be expressed based on each of the RGB values. For example, the processor may obtain RGB values of pixels included in at least a portion of the real license plate, which are different from another portion corresponding to text objects included in the real license plate. The processor may sample RGB values of pixels based on a designated number.

Referring to FIG. 16, in operation 1630, the processor according to an embodiment may change at least one color among pixels included in the first image by using the color information. For example, the processor may change (or replace) each of the RGB values of pixels included in the first image with each of the RGB values corresponding to the real license plate. For example, the processor may change a histogram indicating a color of pixels included in the first image based on a histogram corresponding to the real license plate. For example, the processor may merge noise (e.g., noise 1310) into a first image including at least one pixel with at least one color changed, based on at least one of salt and pepper noise, Gaussian noise, uniform noise, resizing, gradation, filter, and/or morphology operation.

Referring to FIG. 16, in operation 1640, the processor according to an embodiment may obtain a third image (e.g., a third image 162 of FIG. 1) including a vehicle in which the virtual license plate is attached, by merging a second image and a first image including at least one pixel in which at least one color is changed, based on the position information. For example, the first image including at least one pixel in which at least one color is changed may mean the first image in which the noise is merged. For example, the processor may merge the first image and the second image, based on mapping each of vertices of the first image to each of vertices of the real license plate included in the second image using the position information. The processor may project each of the vertices of the first image onto each of the vertices of the real license plate included in the second image, based on the homography.

Referring to FIG. 16, in operation 1650, the processor according to an embodiment may store a pair of the third image, the text objects, and position information indicating a position within the third image to which the first image is attached, as label information (e.g., label information 165 of FIG. 1) for training the neural network. The processor may train a neural network for identifying the license plate using the label information. The operation in which the processor trains the neural network may be an example of supervised learning. However, it is not limited thereto.

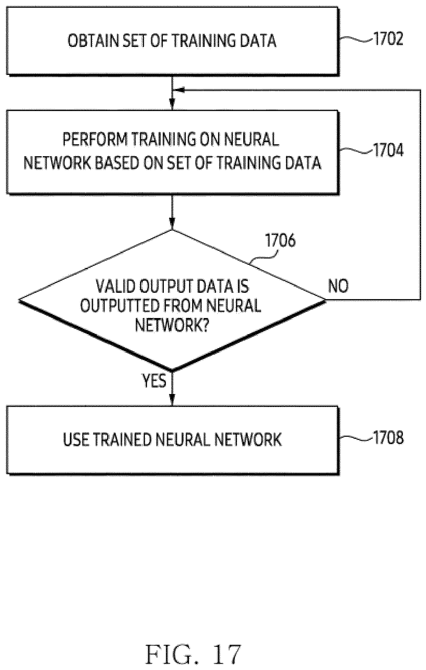

FIG. 17 is a diagram for describing an operation of an electronic device 101 training a neural network based on a set of training data, according to an embodiment. The operation described with reference to FIG. 17 may be performed by an electronic device of FIGS. 1 to 16.

Referring to FIG. 17, in operation 1702, according to an embodiment, the electronic device may obtain the set of training data. The electronic device may obtain a set of training data for supervised learning. The training data may include a pair of input data and ground truth data corresponding to the input data. The ground truth data may indicate output data that is intended to be obtained from a neural network that has received input data that is a pair of the ground truth data. The ground truth data may be obtained by the electronic device described with reference to FIGS. 1 to 12.

For example, in case of training the neural network for image recognition, the training data may include information on an image and one or more subjects included in the image. The information may include a classification (category or class) of a subject identifiable through the image. The information may include, in the image, a position, width, height, and/or size of the visual object corresponding to the subject. The set of training data identified through operation 1702 may include a plurality of pairs of training data. In the example of training the neural network for image recognition, the set of training data identified by the electronic device may include a plurality of images and ground truth data corresponding to each of the plurality of images.

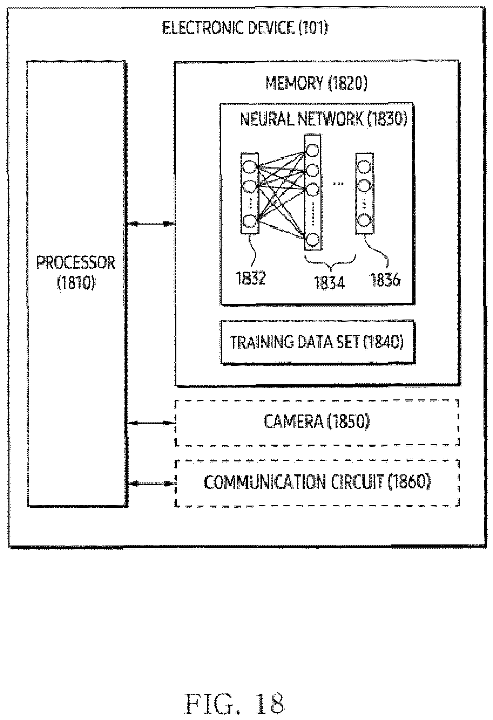

Referring to FIG. 17, in operation 1704, according to an embodiment, the electronic device may perform training on the neural network based on the set of training data. In an embodiment in which the neural network is trained based on the supervised learning, the electronic device may input the input data included in the training data to an input layer of the neural network. An example of a neural network including the input layer will be described with reference to FIG. 18. From an output layer of the neural network that received the input data through the input layer, the electronic device may obtain output data of the neural network corresponding to the input data.

In an embodiment, training of operation 1704 may be performed based on a difference between the output data and the ground truth data included in the training data and corresponding to the input data. For example, the electronic device may adjust one or more parameters (e.g., weights described later with reference to FIG. 18) related to the neural network so that the difference is reduced, based on a gradient descent algorithm. The operation of the electronic device adjusting the one or more parameters may be referred to as tuning for the neural network. The electronic device may perform tuning of the neural network based on the output data using a function defined to evaluate the performance of the neural network, such as a cost function. The difference between the above-described output data and the ground truth data may be included as an example of the cost function.

Referring to FIG. 17, in operation 1706, according to an embodiment, the electronic device may identify whether valid output data is outputted from the neural network trained by operation 1704. That the output data is valid may mean that the difference (or cost function) between the output data and the ground truth data satisfies the conditions set for use of the neural network. For example, in case that the average value and/or maximum value of the difference between the output data and the ground truth data is less than or equal to a designated threshold value, the electronic device may determine that the valid output data is outputted from the neural network.

In case that the valid output data is not output from the neural network (1706-No), the electronic device may repeatedly perform training of the neural network based on operation 1704. The embodiment is not limited thereto, and the electronic device may repeatedly perform operations 1702 and 1704.

In state of obtaining the valid output data from the neural network (1706-Yes), based on operation 1708, according to an embodiment, the electronic device may use the trained neural network. For example, the electronic device may input, as the training data, another input data different from the input data inputted to the neural network to the neural network. The electronic device may use the output data obtained from the neural network that received the other input data as a result of performing inference on the other input data based on the neural network.

FIG. 18 is a block diagram of an electronic device 101 according to an embodiment. The electronic device 101 of FIG. 18 may include an electronic device of FIGS. 1 to 17. For example, operation described with reference to FIG. 17 may be performed by the electronic device 101 of FIG. 18 and/or a processor 1810 of FIG. 18.

Referring to FIG. 18, the processor 1810 of the electronic device 101 may perform computations related to a neural network 1830 stored in memory 1820. The processor 1810 may include at least one of a center processing unit (CPU), a graphic processing unit (GPU), or a neural processing unit (NPU). The NPU may be implemented as a chip separated from the CPU, or integrated into a chip such as the CPU in a form of a system on a chip (SoC). The NPU integrated into the CPU may be referred to as a neural core and/or an artificial intelligence (AI) accelerator.

Referring to FIG. 18, the processor 1810 may identify the neural network 1830 stored in the memory 1820. The neural network 1830 may include a combination of an input layer 1832, one or more hidden layers 1834, and an output layer 1836. The above-described layers (e.g., the input layer 1832, the one or more hidden layers 1834, and the output layer 1836) may include a plurality of nodes. The number of hidden layers 1834 may be different according to embodiments, and the neural network 1830 including a plurality of hidden layers 1834 may be referred to as a deep neural network. The operation of training the deep neural network may be referred to as deep learning.

In an embodiment, in case that the neural network 1830 has a structure of a feed forward neural network, a first node included in a specific layer may be connected to all of the second nodes included in another layer before the specific layer. Parameters stored for the neural network 1830 in the memory 1820 may include weights assigned to connections between the second nodes and the first node. In the neural network 1830 having the structure of the feed forward neural network, a value of the first node may correspond to a weighted sum of values assigned to the second nodes, based on weights assigned to connections connecting the second nodes and the first node.

In an embodiment, in case that the neural network 1830 has a structure of a convolution neural network, the first node included in the specific layer may correspond to a weighted sum for some of the second nodes included in the other layer before the specific layer. Some of the second nodes corresponding to the first node may be identified by a filter corresponding to the specific layer. Parameters stored for the neural network 1830 in the memory 1820 may include weights indicating the filter. The filter may include, among the second nodes, one or more nodes to be used to compute a weighted sum of the first node, and weights corresponding to each of the one or more nodes.

According to an embodiment, the processor 1810 of the electronic device 101 may perform training for the neural network 1830 using the training data set 1840 stored in the memory 1820. Based on the training data set 1840, the processor 1810 may adjust one or more parameters stored in the memory 1820 for the neural network 1830, by performing the operation described with reference to FIG. 17.

According to an embodiment, the processor 1810 of the electronic device 101 may perform object detection, object recognition, and/or object classification using the neural network 1830 trained based on the training data set 1840. The processor 1810 may input an image (or video) obtained through a camera 1850 to the input layer 1832 of the neural network 1830. Based on the input layer 1832 into which the image is inputted, the processor 1810 may obtain a set (e.g., output data) of values of nodes of the output layer 1836, by sequentially obtaining values of nodes of layers included in the neural network 1830. The output data may be used as a result of inferring information included in the image using the neural network 1830. The embodiment is not limited thereto, and the processor 1810 may input an image (or video) obtained from an external electronic device connected to the electronic device 101 through a communication circuit 1860 to the neural network 1830.

In an embodiment, the neural network 1830 trained to process the image may be used to identify (object detection) an area corresponding to a subject in the image, and/or to identify (object recognition and/or object classification) a class of the subject represented in the image. For example, the electronic device 101 may segment the area corresponding to the subject in the image based on a shape of a square such as a bounding box, by using the neural network 1830. For example, the electronic device 101 may identify at least one class matching the subject from among a plurality of designated classes using the neural network 1830.

As described above, in an electronic device according to an embodiment, the electronic device, may be configured to comprise memory, and a processor. The processor may be configured to obtain a first image including a virtual license plate including text objects, using a template indicating a type of license plates. The processor may be configured to, based on identifying a real license plate attached to a vehicle from a second image corresponding to the vehicle, obtain position information of the real license plate and color information regarding at least a portion of the real license plate. The processor may be configured to, using the color information, change at least one color of pixels included in the first image. The processor may be configured to obtain a third image including the vehicle to which the virtual license plate is attached by merging the second image with the first image including at least one pixel of which the at least one color is changed, based on the position information. The processor may be configured to store a pair of the third image, the text objects, and position information indicating a position within the third image to which the first image is attached, as label information for training a neural network.

For example, the processor may be configured to project the virtual license plate included in the first image onto the real license plate attached to the vehicle, using the position information indicating vertices of the real license plate. The processor may be configured to train the neural network for identifying a distinct real license plate different from the real license plate, from a fourth image different from the third image, using the label information.

For example, the processor may be configured to obtain the color information by sampling the pixels included in the at least portion of the real license plate different from another portion of the real license plate including other text objects different from the text objects. The processor may be configured to, using the color information, change color of at least a portion of the virtual license plate including the text objects of the virtual license plate and different from another portion of the virtual license plate. The processor may be configured to generate a noise for the virtual license plate, based on changing parameters indicating pixels included in the virtual license plate of which the color of the at least the portion is changed.

For example, the processor may be configured to using the template including a text template indicating the text objects based on a designated font and a background template indicating a background of the virtual license plate, obtain the first image including the virtual license plate, by attaching, to a designated position of the background template, at least one of the text objects including a text object indicating a number and a text object indicating a character.

For example, the processor may be configured to, using the position information, using a matrix for mapping each of vertices of the virtual license plate to each of vertices of the real license plate, project the virtual license plate onto the real license plate, in the second image.

For example, the processor may be configured to, using the color information indicating RGB values corresponding to color of the real license plate, based on the changing each of RGB values corresponding to color of the first image, change the at least one color of the pixels of the first image.

For example, the processor may be configured to, based on identifying pixels corresponding to the real license plate attached to the vehicle using pixels included in the second image, using an area including the pixels corresponding to the real license plate from the second image, identify the position information of the real license plate.

For example, the processor may be configured to obtain the first image including the virtual license plate including mixed text objects by mixing the text objects with a designated size using the template.

In a method performed by an electronic device according to an embodiment as described above, the method may comprise obtaining a first image including a virtual license plate including text objects, using a template indicating a type of license plates. The method may comprise, based on identifying a real license plate attached to a vehicle from a second image corresponding to the vehicle, obtaining position information of the real license plate and color information regarding at least a portion of the real license plate. The method may comprise, using the color information, changing at least one color of pixels included in the first image. The method may comprise obtaining a third image including the vehicle to which the virtual license plate is attached by merging the second image with the first image including at least one pixel of which the at least one color is changed, based on the position information. The method may comprise storing a pair of the third image, the text objects, and position information indicating a position within the third image to which the first image is attached, as label information for training a neural network.

For example, the method may comprise projecting the virtual license plate included in the first image onto the real license plate attached to the vehicle, using the position information indicating vertices of the real license plate. The method may comprise training the neural network for identifying a distinct real license plate different from the real license plate, from a fourth image different from the third image, using the label information.

For example, the method may comprise obtaining the color information by sampling the pixels included in the at least portion of the real license plate different from another portion of the real license plate including other text objects different from the text objects. The method may comprise, using the color information, changing color of at least a portion of the virtual license plate including the text objects of the virtual license plate and different from another portion of the virtual license plate. The method may comprise generating a noise for the virtual license plate, based on changing parameters indicating pixels included in the virtual license plate of which the color of the at least the portion is changed.

For example, the method may comprise, using the template including a text template indicating the text objects based on a designated font and a background template indicating a background of the virtual license plate, obtaining the first image including the virtual license plate, by attaching, to a designated position of the background template, at least one of the text objects including a text object indicating a number and a text object indicating a character.

For example, the method may comprise, using the position information, using a matrix for mapping each of vertices of the virtual license plate to each of vertices of the real license plate, projecting the virtual license plate onto the real license plate, in the second image.

For example, the method may comprise, using the color information indicating RGB values corresponding to color of the real license plate, based on the changing each of RGB values corresponding to color of the first image, changing the at least one color of the pixels of the first image.

For example, the method may comprise, based on identifying pixels corresponding to the real license plate attached to the vehicle using pixels included in the second image, using an area including the pixels corresponding to the real license plate from the second image, identifying the position information of the real license plate.

In a computer readable storage medium storing one or more programs according to an embodiment as described above, the one or more programs may be configured to comprise instructions that, when executed by a processor of an electronic device, cause the electronic device to obtain a first image including a virtual license plate including text objects, using a template indicating a type of license plates. The one or more programs may be configured to comprise instructions that, when executed by the processor of the electronic device, cause the electronic device to, based on identifying a real license plate attached to a vehicle from a second image corresponding to the vehicle, obtain position information of the real license plate and color information regarding at least a portion of the real license plate. The one or more programs may be configured to comprise instructions that, when executed by the processor of the electronic device, cause the electronic device to, using the color information, change at least one color of pixels included in the first image. The one or more programs may be configured to comprise instructions that, when executed by the processor of the electronic device, cause the electronic device to obtain a third image including the vehicle to which the virtual license plate is attached by merging the second image with the first image including at least one pixel of which the at least one color is changed, based on the position information. The one or more programs may be configured to comprise instructions that, when executed by the processor of the electronic device, cause the electronic device to store a pair of the third image, the text objects, and position information indicating a position within the third image to which the first image is attached, as label information for training a neural network.

For example, the one or more programs may be configured to comprise the instructions that, when executed by the processor of the electronic device, cause the electronic device to project the virtual license plate included in the first image onto the real license plate attached to the vehicle, using the position information indicating vertices of the real license plate. The one or more programs may be configured to comprise the instructions that, when executed by the processor of the electronic device, cause the electronic device to train the neural network for identifying a distinct real license plate different from the real license plate, from a fourth image different from the third image, using the label information.

For example, the one or more programs may be configured to comprise the instructions that, when executed by the processor of the electronic device, cause the electronic device to obtain the color information by sampling the pixels included in the at least a portion of the real license plate different from another portion of the real license plate including other text objects different from the text objects. The one or more programs may be configured to comprise the instructions that, when executed by the processor of the electronic device, cause the electronic device to, using the color information, change color of at least a portion of the virtual license plate including the text objects of the virtual license plate and different from another portion of the virtual license plate. The one or more programs may be configured to comprise the instructions that, when executed by the processor of the electronic device, cause the electronic device to generate a noise for the virtual license plate, based on changing parameters indicating pixels included in the virtual license plate of which the color of the at least the portion is changed.

For example, the one or more programs may be configured to comprise the instructions that, when executed by the processor of the electronic device, cause the electronic device to, using the template including a text template indicating the text objects based on a designated font and a background template indicating a background of the virtual license plate, obtain the first image including the virtual license plate, by attaching, to a designated position of the background template, at least one of the text objects including a text object indicating a number and a text object indicating a character.

For example, the one or more programs may be configured to comprise the instructions that, when executed by the processor of the electronic device, cause the electronic device to, using the position information, using a matrix for mapping each of vertices of the virtual license plate to each of vertices of the real license plate, project the virtual license plate onto the real license plate, in the second image.

The device described above may be implemented as a hardware component, a software component, and/or a combination of a hardware component and a software component. For example, the devices and components described in the embodiments may be implemented by using one or more general purpose computers or special purpose computers, such as a processor, controller, arithmetic logic unit (ALU), digital signal processor, microcomputer, field programmable gate array (FPGA), programmable logic unit (PLU), microprocessor, or any other device capable of executing and responding to instructions. The processing device may perform an operating system (OS) and one or more software applications executed on the operating system. In addition, the processing device may access, store, manipulate, process, and generate data in response to the execution of the software. For convenience of understanding, there is a case that one processing device is described as being used, but a person who has ordinary knowledge in the relevant technical field may see that the processing device may include a plurality of processing elements and/or a plurality of types of processing elements. For example, the processing device may include a plurality of processors or one processor and one controller. In addition, another processing configuration, such as a parallel processor, is also possible.

The software may include a computer program, code, instruction, or a combination of one or more thereof, and may configure the processing device to operate as desired or may command the processing device independently or collectively. The software and/or data may be embodied in any type of machine, component, physical device, computer storage medium, or device, to be interpreted by the processing device or to provide commands or data to the processing device. The software may be distributed on network-connected computer systems and stored or executed in a distributed manner. The software and data may be stored in one or more computer-readable recording medium.

The method according to the embodiment may be implemented in the form of a program command that may be performed through various computer means and recorded on a computer-readable medium. In this case, the medium may continuously store a program executable by the computer or may temporarily store the program for execution or download. In addition, the medium may be various recording means or storage means in the form of a single or a combination of several hardware, but is not limited to a medium directly connected to a certain computer system, and may exist distributed on the network. Examples of media may include may be those configured to store program instructions, including a magnetic medium such as a hard disk, floppy disk, and magnetic tape, optical recording medium such as a CD-ROM and DVD, magneto-optical medium, such as a floptical disk, and ROM, RAM, flash memory, and the like. In addition, examples of other media may include recording media or storage media managed by app stores that distribute applications, sites that supply or distribute various software, servers, and the like.

As described above, although the embodiments have been described with limited examples and drawings, a person who has ordinary knowledge in the relevant technical field is capable of various modifications and transform from the above description. For example, even if the described technologies are performed in a different order from the described method, and/or the components of the described system, structure, device, circuit, and the like are coupled or combined in a different form from the described method, or replaced or substituted by other components or equivalents, appropriate a result may be achieved.

Therefore, other implementations, other embodiments, and those equivalent to the scope of the claims are in the scope of the claims described later.

**Claims**

1.  An electronic device, comprising:

    memory, comprising one or more storage mediums, storing instructions, and
    at least one processor comprising processing circuitry; and
    wherein the instructions, when executed by the at least one processor individually or collectively, cause the electronic device to:

    obtain a first image including a virtual license plate including text objects, using a template indicating a type of license plates,
    based on identifying a real license plate attached to a vehicle from a second image corresponding to the vehicle, obtain position information of the real license plate and color information regarding at least a portion of the real license plate,
    using the color information, change at least one color of pixels included in the first image,
    obtain a third image including the vehicle to which the virtual license plate is attached by merging the second image with the first image including at least one pixel of which the at least one color is changed, based on the position information, and
    store a pair of the third image, the text objects, and position information indicating a position within the third image to which the first image is attached, as label information for training a neural network.

2.  The electronic device of claim 1,

wherein the instructions, when executed by the at least one processor individually or collectively, cause the electronic device to:

project the virtual license plate included in the first image onto the real license plate attached to the vehicle, using the position information indicating vertices of the real license plate, and
train the neural network for identifying a distinct real license plate different from the real license plate, from a fourth image different from the third image, using the label information.

3. The electronic device of claim 2,
wherein the instructions, when executed by the at least one processor individually or collectively, cause the electronic device to:

obtain the color information by sampling the pixels included in the at least portion of the real license plate different from another portion of the real license plate including other text objects different from the text objects,
using the color information, change color of at least a portion of the virtual license plate including the text objects of the virtual license plate and different from another portion of the virtual license plate, and
generate a noise for the virtual license plate, based on changing parameters indicating pixels included in the virtual license plate of which the color of the at least the portion is changed.

4. The electronic device of claim 3,
wherein the instructions, when executed by the at least one processor individually or collectively, cause the electronic device to:
using the template including a text template indicating the text objects based on a designated font and a background template indicating a background of the virtual license plate, obtain the first image including the virtual license plate, by attaching, to a designated position of the background template, at least one of the text objects including a text object indicating a number and a text object indicating a character.

5. The electronic device of claim 2,
wherein the instructions, when executed by the at least one processor individually or collectively, cause the electronic device to:
using the position information, using a matrix for mapping each of vertices of the virtual license plate to each of vertices of the real license plate, project the virtual license plate onto the real license plate, in the second image.

6. The electronic device of claim 1,
wherein the instructions, when executed by the at least one processor individually or collectively, cause the electronic device to:
using the color information indicating RGB values corresponding to color of the real license plate, based on the changing each of RGB values corresponding to color of the first image, change the at least one color of the pixels of the first image.

7. The electronic device of claim 1,
wherein the instructions, when executed by the at least one processor individually or collectively, cause the electronic device to:
based on identifying pixels corresponding to the real license plate attached to the vehicle using pixels included in the second image, using an area including the pixels corresponding to the real license plate from the second image, identify the position information of the real license plate.

8. The electronic device of claim 1,
wherein the instructions, when executed by the at least one processor individually or collectively, cause the electronic device to:
obtain the first image including the virtual license plate including mixed text objects by mixing the text objects with a designated size using the template.

9. A method performed by an electronic device comprising:

obtaining a first image including a virtual license plate including text objects, using a template indicating a type of license plates,
based on identifying a real license plate attached to a vehicle from a second image corresponding to the vehicle, obtaining position information of the real license plate and color information regarding at least a portion of the real license plate,

using the color information, changing at least one color of pixels included in the first image,

obtaining a third image including the vehicle to which the virtual license plate is attached by merging the second image with the first image including at least one pixel of which the at least one color is changed, based on the position information, and

storing a pair of the third image, the text objects, and position information indicating a position within the third image to which the first image is attached, as label information for training a neural network.

**10.** The method of claim 9, comprising,

projecting the virtual license plate included in the first image onto the real license plate attached to the vehicle, using the position information indicating vertices of the real license plate, and

training the neural network for identifying a distinct real license plate different from the real license plate, from a fourth image different from the third image, using the label information.

**11.** The method of claim 10, comprising,

obtaining the color information by sampling the pixels included in the at least portion of the real license plate different from another portion of the real license plate including other text objects different from the text objects, using the color information, changing color of at least a portion of the virtual license plate including the text objects of the virtual license plate and different from another portion of the virtual license plate, and

generating a noise for the virtual license plate, based on changing parameters indicating pixels included in the virtual license plate of which the color of the at least the portion is changed.

**12.** The method of claim 11, comprising,
using the template including a text template indicating the text objects based on a designated font and a background template indicating a background of the virtual license plate, obtaining the first image including the virtual license plate, by attaching, to a designated position of the background template, at least one of the text objects including a text object indicating a number and a text object indicating a character.

**13.** The method of claim 10, comprising,
using the position information, using a matrix for mapping each of vertices of the virtual license plate to each of vertices of the real license plate, projecting the virtual license plate onto the real license plate, in the second image.

**14.** The method of claim 9, comprising,
using the color information indicating RGB values corresponding to color of the real license plate, based on the changing each of RGB values corresponding to color of the first image, changing the at least one color of the pixels of the first image.

**15.** A non-transitory computer readable storage medium storing one or more programs, wherein the one or more programs are configured to comprise instructions that, when executed by at least one processor of an electronic device individually or collectively, cause the electronic device to:

obtain a first image including a virtual license plate including text objects, using a template indicating a type of license plates,

based on identifying a real license plate attached to a vehicle from a second image corresponding to the vehicle, obtain position information of the real license plate and color information regarding at least a portion of the real license plate,

using the color information, change at least one color of pixels included in the first image,

obtain a third image including the vehicle to which the virtual license plate is attached by merging the second image with the first image including at least one pixel of which the at least one color is changed, based on the position information, and

store a pair of the third image, the text objects, and position information indicating a position within the third image to which the first image is attached, as label information for training a neural network.

ELECTRONIC DEVICE (101)

PROCESSOR (120)

MEMORY (130)

TEMPLATE (150)

BACKGROUND TEMPLATE (151)

TEXT TEMPLATE (153)

FIRST IMAGE (160)

SECOND IMAGE (161)

THIRD IMAGE (162)

LABEL INFORMATION (165)

FIG. 1

FIG. 2

```
{
    "version": "5.x.x",
    "flags": { },
    "imagePath": "0_58도0290.jpg",
    "imageData": null,
    "imageHeight": 1740,
    "imageWidth": 2560,
    "shapes": [
        {
            "Lable": "0_58도0290",
            "points": [
                [
                    1240.1408450704225,
                    1042.5352112676057
                ],
                [
                    1493.661971830986,
                    1115.4225352112676
                ],
            ],
            "shape_type": "rectangle",
            "flags": {
                "type01" : true,
                "type02" : false,
                "type03" : false,
                "type04" : false,
                "typeETC" : false,
                "num_0" : false,
                "num_1" : false,
                "num_2" : false,
                "num_3" : false,
                "num_4" : false,
                "num_5" : false,
                "num_6" : false,
                "num_7" : false,
                "num_8" : false,
                "num_9" : false,
                "num_inverse_0" : false,
                "num_inverse_1" : false,
```

FIG. 3

FIG. 4

501

12가1234

503

| 1 |
| 0 |
| 0 |
| 0 |

| 255 | 1 | 21 | 111 | 77 |
| 5 | 3 | 78 | 22 | 85 |
| 10 | 233 | 77 | 33 | 95 |
| 55 | 211 | 231 | 231 | 234 |
| 98 | 100 | 95 | 4 | 111 |

502

505-1          505-2          505

FIG. 5

FIG. 6

700

| CATEGORY | | | CLASSIFICATION | | SYMBOL |
|---|---|---|---|---|---|
| VEHICLE TYPE | | PASSENGER CAR | FOR NON-BUSINESS USE | | 100-699 |
| | | | FOR RENTAL BUSINESS | | |
| | | | FOR GENERAL BUSINESS USE | | 01-69 |
| | | VAN | FOR NON-BUSINESS USE | | 700-799 |
| | | | FOR RENTAL BUSINESS | | |
| | | | FOR GENERAL BUSINESS USE | | 70-79 |
| | | TRUCK | FOR NON-BUSINESS USE | | 800-979 |
| | | | FOR GENERAL BUSINESS USE | | 80-97 |
| | | SPECIAL CAR | FOR NON-BUSINESS USE | | 980-997 |
| | | | FOR RENTAL BUSINESS | | |
| | | | FOR GENERAL BUSINESS USE | | 98, 99 |
| | | EMERGENCY CAR | POLICE VEHICLE | | 998-999 |
| | | | FIRE ENGINE | | |
| USAGE TYPE | FOR NON-BUSINESS USE (INCLUDING SOFA) | PRIVATE CAR (INCLUDING FOR OFFICIAL USE) | 가, 나, 다, 라, 마, 거, 너, 더, 레, 머, 버, 서, 어, 저, 고, 노, 도, 로, 모, 보, 소, 오, 조, 구, 누, 두, 루, 무, 부, 수, 무, 주 (TOTAL OF THIRTY TWO TYPES) | | |
| | FOR AUTOMOBILE TRANSPORTATION BUSINESSES | FOR GENERAL BUSINESS USE | 바, 사, 아, 자, 배 (PARCEL (DELIVERY) SERVICE) (TOTAL OF FIVE TYPES) | | |
| | | FOR RENTAL BUSINESS | 허, 하, 호 (TOTAL OF THREE TYPES, RENTAL CAR) | | |
| | FOR DIPLOMATIC USE | FOR DIPLOMAT USE | DIPLOMACY | | |
| | | FOR CONSULAR USE | CONSULAR | | |
| | | FOR QUASI-DIPLOMAT USE | QUASI-DIPLOMAT | | |
| | | FOR QUASI-CONSULAR USE | QUASI-CONSULAR | | |
| | | FOR INTERNATIONAL ORGANIZATION USE | NATIONAL FLAG | | |
| | | FOR OTHER DIPLOMATIC USE | AGREEMENT, REPRESENTATIVE | | |

FIG. 7

800-1

| Type | USE | STANDARD | SAMPLE |
|------|-----|----------|--------|
| Type 1 | FOR NON-BUSINESS USE | 335mm x 170mm | |
| Type 2 | FOR NON-BUSINESS USE (NORMAL) | 335mm x 170mm | |
| | FOR BUSINESS USE (NORMAL/LARGE) | 335mm x 170mm 440mm x 220mm | |
| | FOR BUSINESS USE (NORMAL/LARGE) | 335mm x 170mm 440mm x 220mm | |
| Type 3 | PRIVATE CAR FOR NON-BUSINESS USE | 335mm x 170mm 440mm x 220mm | |
| Type 4 | HEAVY EQUIPMENT FOR BUSINESS USE /OFFICIAL USE | 600mm x 280mm 440mm x 220mm | |
| Type 5 | HEAVY EQUIPMENT FOR BUSINESS USE (NORMAL/LARGE) | 600mm x 280mm 440mm x 220mm | |
| Type 6 | FOR MILITARY USE | 335mm x 155mm | |
| | PRIVATE CAR FOR NON-BUSINESS USE (NORMAL/LARGE) | 335mm x 155mm 440mm x 220mm | |
| Type 7 | PRIVATE CAR/ HEAVY EQUIPMENT FOR OFFICIAL USE (NORMAL/LARGE) | 600mm x 280mm 440mm x 220mm | |

FIG. 8A

800-2

| Type | USE | STANDARD | SAMPLE |
|---|---|---|---|
| Type 8 | ECO-FRIENDLY (ELECTRICITY) | 335mm x 170mm | 52가 3108 |
| | PRIVATE CAR FOR NON-BUSINESS USE | 335mm x 170mm 440mm x 220mm | 52허 6280 |
| | FOR MILITARY USE | 335mm x 170mm 440mm x 220mm | 76육 9034 |
| Type 9 | 22-YEAR NEW CONSTRUCTION EQUIPMENT | 600mm x 280mm 440mm x 220mm | 06소 5 |
| Type 10 | FOR BUSINESS USE | 600mm x 280mm 440mm x 220mm | 96사 2268 |
| Type 11 | TEMPORARY LICENSE PLATE FOR 10 DAYS OR LESS | 335mm x 155mm | 003173 |
| Type 12 | | 335mm x 155mm 440mm x 220mm | 261719 |
| Type 13 | TEMPORARY LICENSE PLATE FOR 11 DAYS OR MORE | 335mm x 155mm | 임 3069 |
| Type 14 | | 335mm x 170mm | 임07-1193 |
| Type 15 | | 520mm x 110mm | 임 1234 |
| Type 16 | | 520mm x 110mm | 임9009 |
| Type 17 | DIPLOMACY | 335mm x 170mm | 000-000 |
| Type 18 | | 520mm x 110mm | 000-000 |

FIG. 8B

FIG. 9

FIG. 10

FIG. 11

FIG. 12

FIG. 13

FIG. 14

FIG. 15

OBTAIN FIRST IMAGE INCLUDING VIRTUAL LICENSE PLATE INCLUDING TEXT OBJECTS USING TEMPLATE INDICATING TYPE OF LICENSE PLATE —1610

OBTAIN POSITION INFORMATION OF REAL LICENSE PLATE AND COLOR INFORMATION FOR AT LEAST PORTION OF REAL LICENSE PLATE, BASED ON IDENTIFYING REAL LICENSE PLATE ATTACHED TO VEHICLE, IN SECOND IMAGE CORRESPONDING TO VEHICLE —1620

CHANGE AT LEAST ONE COLOR AMONG PIXELS INCLUDED IN FIRST IMAGE BY USING COLOR INFORMATION —1630

OBTAIN THIRD IMAGE INCLUDING VEHICLE IN WHICH VIRTUAL LICENSE PLATE IS ATTACHED, BY MERGING SECOND IMAGE AND FIRST IMAGE INCLUDING AT LEAST ONE PIXEL IN WHICH AT LEAST ONE COLOR IS CHANGED, BASED ON POSITION INFORMATION —1640

STORE PAIR OF THIRD IMAGE, TEXT OBJECTS, AND POSITION INFORMATION INDICATING POSITION WITHIN THIRD IMAGE TO WHICH FIRST IMAGE IS ATTACHED, AS LABEL INFORMATION FOR TRAINING NEURAL NETWORK —1650

FIG. 16

FIG. 17

ELECTRONIC DEVICE (101)

PROCESSOR (1810)

MEMORY (1820)

NEURAL NETWORK (1830)

1832    1834    1836

TRAINING DATA SET (1840)

CAMERA (1850)

COMMUNICATION CIRCUIT (1860)

FIG. 18

FIG. 19

Europäisches
Patentamt

European
Patent Office

Office européen
des brevets

# EUROPEAN SEARCH REPORT

**Application Number**

EP 24 18 4983

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | BJÖRKLUND TOMAS ET AL: "Robust license plate recognition using neural networks trained on synthetic images", PATTERN RECOGNITION, vol. 93, 1 September 2019 (2019-09-01), pages 134-146, XP085703099, ISSN: 0031-3203, DOI: 10.1016/J.PATCOG.2019.04.007 * the whole document * | 1-15 | INV. G06V10/82 G06V20/62 |
| X | Harrysson Olof: "LICENSE PLATE DETECTION UTILIZING SYNTHETIC DATA FROM SUPERIMPOSITION OLOF HARRYSSON", , 27 May 2019 (2019-05-27), XP093223340, Retrieved from the Internet: URL:https://lup.lub.lu.se/luur/download?fu nc=downloadFile&recordOId=8977867&fileOId= 8978320 [retrieved on 2024-11-13] * the whole document * | 1-15 | |
| A | EP 2 595 092 B1 (XEROX CORP [US]) 2 March 2016 (2016-03-02) * paragraph [0010] * * paragraph [0012] * * paragraph [0022] - paragraph [0029]; figures 3a, 3b * * paragraph [0031] - paragraph [0032] * * paragraph [0041] - paragraph [0042] * | 1-15 | **TECHNICAL FIELDS SEARCHED (IPC)** G06V |
| A | CN 115 171 088 A (ZHEJIANG DAHUA TECHNOLOGY CO) 11 October 2022 (2022-10-11) * the whole document * | 1-15 | |
| A | CN 113 971 627 A (HUAWEI TECH CO LTD) 25 January 2022 (2022-01-25) * the whole document * | 1-15 | |

The present search report has been drawn up for all claims

| Place of search | Date of completion of the search | Examiner |
|---|---|---|
| The Hague | 14 November 2024 | de Castro Palomares |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

    
& : member of the same patent family, corresponding
    document

EPO FORM 1503 03.82 (P04C01)

EP 4 485 382 A1

## ANNEX TO THE EUROPEAN SEARCH REPORT
## ON EUROPEAN PATENT APPLICATION NO.

EP 24 18 4983

14-11-2024

| Patent document cited in search report | | Publication date | Patent family member(s) | | Publication date |
|---|---|---|---|---|---|
| EP 2595092 | B1 | 02-03-2016 | EP | 2595092 A2 | 22-05-2013 |
| | | | EP | 2897082 A1 | 22-07-2015 |
| | | | US | 2013129151 A1 | 23-05-2013 |
| CN 115171088 | A | 11-10-2022 | NONE | | |
| CN 113971627 | A | 25-01-2022 | NONE | | |

EPO FORM P0459